# EUROPÄISCHE PATENTSCHRIFT

(11) **EP 1 065 170 B1**
(45) Veröffentlichungstag und Bekanntmachung des Hinweises auf die Patenterteilung: **03.11.2004**
(21) Anmeldenummer: 00112144.1
(22) Anmeldetag: 06.06.2000
(51) Int. Cl.: C02F 1/46, C25B 15/02, B01J 19/00

(54) **Verfahren und Vorrichtung zum Einstellen von pH+-Werten und Redoxpotentialen von Flüssigkeiten mittels Elektrolyse**
Process and apparatus for electrolytically adjusting the ph and the redox-potential of fluids
Procédé et dispositif pour régler électrolytiquement le ph et le potentiel redox de fluides

(30) Priorität: 29.06.1999 DE 19929579
(43) Veröffentlichungstag der Anmeldung: 03.01.2001
(73) Patentinhaber: SGL Acotec GmbH, 56427 Siershahn (DE)
(72) Erfinder: Härtel, Georg, Prof. Dr. Ing. habil., 09599 Freiberg (DE); Nikolai, Ulrich, Dipl.-Ing., 86558 Hohenwart (DE); Soldner, Uwe, Dipl.-Ing., 29664 Walsrode (DE); Künzel, Jürgen, Dipl.-Ing., Dr., 86672 Thierhaupten (DE)

(56) Entgegenhaltungen:
- EP-A- 0 518 075
- EP-A- 0 612 694
- US-A- 4 206 020
- US-A- 4 971 675

## Beschreibung

Die vorliegende Erfindung betrifft ein Verfahren zum gezielten Einstellen des Redoxpotentials und/oder des pH⁺-Wertes von mindestens einer Flüssigkeit in mindestens einer Elektrolysezelle zum Bereitstellen von reaktiven Flüssigkeiten für weitere Verfahrensschritte. Die Erfindung betrifft ferner eine Elektrolysezelle mit einem Anoden- und einem Kathodenraum zum gezielten Einstellen des Redoxpontentiales und/oder des pH⁺-Wertes von mindestens einer Flüssigkeit sowie desweiteren eine Elektrolyseanlage zum gezielten Einstellen des Redoxpotentials und/oder des pH⁺-Wertes von mindestens einer Flüssigkeit und die Verwendung des Verfahrens, der Elektrolysezelle und der Elektrolyseanlage für das Einstellen des Redoxpotentials und des pH⁺-Wertes von Waschwässern in Gasreinigungsanlagen, insbesondere von Waschwässern für das Reinigen von Abgasen von Müllverbrennungsanlagen.

Durch Einstellen bestimmter Redoxpotentiale und/oder pH⁺-Werte in Füssigkeiten oder Lösungen können bestimmte chemische Reaktionen bewirkt werden. Zum Einstellen solcher Redoxpotentialen und pH⁺-Werten bedient man sich sowohl chemischer als auch elektrochemischer Verfahren. Bei industriellen Prozessen wie beispielsweise beim Galvanisieren, beim Naßreinigen von Abgasen, z.B. von Abgasen von Verbrennungsanlagen, insbesondere von Müll- oder sogar Sondermüllverbrennungsanlagen oder beim Lagern von Müll verschiedener Art in Deponien fallen Flüssigkeiten an, die so mit toxischen Verbindungen, mit Schwermetallen oder umweltschädlichen Substanzen belastet sind, daß sie nicht ohne vorherige Reinigung in Vorfluter eingeleitet werden dürfen. Beim Naßaufbereiten und Naßreinigen von Gasen mit Hilfe von Wäschern fallen auch verunreinigte Waschwässer des vorgenannten Typs an. Aus wirtschaftlichen Gründen wird in vielen Fällen mindestens ein Teil solcher Wässer dem Wäscher im Kreislauf wieder zugeführt. Beim Waschprozeß werden die Waschwässer mit diversen Schadstoffen wie beispielsweise Schwefeldioxid, Stickoxiden, Halogenen, Dioxinen oder Schwermetallen und von Reaktionsprodukten von diesen mit der Waschflüssigkeit beladen. Um die Waschwirkung der Waschflüssigkeiten in der gewünschten Weise aufrechtzuerhalten, muß wenigstens ein Teilstrom dieser Waschflüssigkeiten zwischendurch mit dem Ziel behandelt werden, ein bestimmtes Redoxpotential und einen bestimmten pH⁺-Wert einzustellen oder/und bestimmte unerwünschte Bestandteile wie beispielsweise Halogene, Halogenide oder Schwermetalle zu entfernen. Dieses Einstellen der Redoxpotentiale, der pH⁺-Werte und der Zusammensetzung solcher Waschwässer wird häufig durch Zufügen von Chemikalien, vorzugsweise von Salzen, Salzlösungen oder basisch oder sauer reagierenden Substanzen zu den Waschwässern vorgenommen. Chemikalien der vorgenannten Art werden auch zum Aufbereiten von Abwässern von Galvanisierbetrieben, von Deponiesickerwässern und anderen, die Umwelt gefährdenden Flüssigkeiten verwendet. Das vorstehend genannte Aufbereiten mit Chemikalien ist jedoch mit erheblichen Nachteilen verbunden. Außer den Kosten für die Chemikalien, ist der Meß- und Regelaufwand sowie der Aufwand für das sachgemäße Vermischen mit den Flüssigkeiten, die behandelt werden sollen, beträchtlich. Desweiteren werden dadurch die zu behandelnden Flüssigkeiten aufgesalzt und in vielen Fällen werden beim Zusetzen der Chemikalien gleichzeitig Fällungsreaktionen ausgelöst. Die ausgefällten Substanzen wie beispielsweise Schwermetallsalze oder -hydroxide müssen dann vor dem Weiterverwenden der Flüssigkeiten abgetrennt werden. Ein weiterer wesentlicher Nachteil des Arbeitens mit Chemikalienzusätzen liegt jedoch darin, daß der Salzgehalt der Flüssigkeiten in jedem Falle steigt. Solche Flüssigkeiten dürfen im allgemeinen nicht in Vorfluter eingeleitet werden und müssen gesondert, beispielsweise durch Eindampfen aufgearbeitet werden. Würden sie aber in ein freies Gewässer eingeleitet, erhöhten sie den Salzgehalt dieses Gewässers in ungünstiger Weise. Beim Reinigen von Abgasen nach Müll- oder Sondermüllverbrennungsanlagen tritt noch ein weiteres Problem auf. Wegen der auch in kurzen Zeiträumen wechselnden Zusammensetzung des Verbrennungsgutes, schwankt im Abgas auch der Gehalt an Schadstoffen, die mittels Wäschern entfernt werden müssen. Da das Einstellen von Redoxpotentialen und pH⁺-Werten mit Hilfe des Zudosierens von Chemikalien sehr träge ist, die Änderungen der Zusammensetzung und hier speziell der Schadstoffzusammensetzung in den Abgasen aber vergleichsweise schnell geschieht, kommt es immer wieder zu Durchbrüchen von schädlich und auch in den nachgeschalteten Anlagen korrodierend wirkenden Substanzen wie beispielsweise freien Halogenen oder Schwefeldioxid. Außerdem besteht in solchen Fällen stets die Gefahr, daß die vorgeschriebenen Emissionsgrenzwerte überschritten werden.

In der DE-A 41 19 606 wird ein.Verfahren und es wird eine Vorrichtung zum Aufarbeiten einer salzsäurehaltigen Flüssigkeit, insbesondere eines Waschwassers aus einem Rauchgaswäscher oder eines Abwassers von einer Galvanisieranlage mittels einer Wirbelschichtelektrolyse beschrieben. Die Elektrolysezelle besteht aus einem eine Anode enthaltenden Anodenraum, einem eine Kathode enthaltenden Kathodenraum und einem Diaphragma, das Anoden- und Kathodenraum voneinander trennt. Die dort beschriebene Erfindung ist darauf gerichtet, aus der Flüssigkeit elektrolytisch Chlor und Wasserstoff zu gewinnen und diese beiden Stoffe als Wertstoffe weiterzuverwenden. Die elektrolytisch behandelte, von Salzsäure abgereicherte Flüssigkeit soll als Waschwasser weiterverarbeitet werden.

Aus der DE-A 39 21 180 ist ein Verfahren und eine Anlage zum Reinigen von HCl und andere Schadstoffe enthaltenden Abgasen, die mittels saurer Wäscher gereinigt werden sollen, bekannt. Bei diesem Verfahren wird ein Teilstrom der sauren Waschwässer in einer Elektrolysezone, vorzugsweise einer zweistufigen Elektrolyseanlage, behandelt und dabei Chlor und Wasserstoff abgeschieden. Ein Teil des Chlors und ggf. des Bromats und Jodats wird dem Rauchgaswäscher als Oxidationsmittel wieder zugeführt, ein anderer Teil dient der Herstellung von als Wertstoff brauchbarer Salzsäure. Nach einer Variante des Verfahrens können neben Chlor auch Brom und Jod elektrolytisch oder chemisch aus dem Waschwasser entfernt werden. Die verwendete Elektrolysezone oder -Anlage ist in dieser Schrift nicht näher beschrieben.

Aus der DE-A 35 07 626 ist ein Verfahren und eine Vorrichtung zum Abscheiden von NOₓ nach Rauchgaswäschern, die zum Abscheiden von SO₂ dienen, zu entnehmen. Bei diesem Verfahren werden Waschwässer aus der NOₓ-Waschung, die EDTA (Ethylendiamintetraacetat) und Fe³⁺-Ionen enthalten, einer Elektrolyseanlage zugeführt und dort mit einem Redoxpotential versehen. Von der Elektrolyseanlage werden diese Wässer, die mit einem negativen Redoxpotential versehen worden sind, also reduzierend wirken, in einen Regenerationsbehälter zum Umwandeln von Fe³⁺ in Fe²⁺ überführt und dann wieder als Waschwasser zum Binden von NOₓ verwendet. Nach einer Variante des Verfahrens wird der Elektrolyseanlage ein Teilstrom des Waschwassers aus der vorgeschalteten Stufe zum Entfernen des Schwefeldioxids zugeführt und in dieser elektrolytisch zersetzt, wobei Wasserstoff, Sauerstoff, Chlorgas, Salpetersäure, Schwefelsäure sowie kathodisch und/oder anodisch abgeschiedene Kristalle entstehen sollen. Dieser Schrift ist lediglich zu entnehmen, daß auf elektrolytischem Wege ein Redoxpotential eingestellt wird, das ausreicht, einen Fe³⁺-EDTA-Komplex zu einem Fe²⁺-EDTA-Komplex in einem Waschwasser zu reduzieren. Über das Verfahren zum Einstellen des Redoxpotentials und die dazu verwendete Elektrolysezelle ist dieser Schrift nichts zu entnehmen.

Es war die Aufgabe der dieser Patentanmeldung zugrundeliegenden Erfindung, die vorgenannten Nachteile des Standes der Technik zu überwinden und in Flüssigkeiten oder Waschwässern, die toxische, korrodierende und/oder für die Umwelt schädliche Substanzen enthalten, ohne Zusätze von Chemikalien zu verwenden, schnell, betriebssicher und mit geringem Aufwand Redoxpotentiale und pH⁺-Werte einzustellen, die diese Flüssigkeiten für das Verwenden in nachgeschalteten Verfahrensschritten, insbesondere für Waschprozesse von mit Schadstoffen befrachteten Abgasen, geeignet machen. Diese Aufgabe enthielt die Schaffung eines Verfahrens zum Einstellen von Redoxpotentialen und pH⁺-Werten und von Vorrichtungen zur Durchführung des Verfahrens.

Die Aufgabe wird durch ein Verfahren mit den Merkmalen des Patentanspruchs 1 und durch Vorrichtungen gemäß den Merkmalen der Patentansprüche 25 und 30 gelöst. Die nachgeordneten Ansprüche geben vorteilhafte Ausgestaltungen der Erfindung an.

Bei dem erfindungsgemäßen Verfahren wird die Flüssigkeit - aus Gründen der sprachlichen Vereinfachung soll im folgenden unter dem Begriff "Flüssigkeit" auch die Mehrzahl von Flüssigkeit, nämlich "Flüssigkeiten" verstanden werden -, in der ein bestimmtes Redoxpotential und ein bestimmter pH⁺-Wert eingestellt werden soll, durch eine Wirbelschichtelektrolysezelle, die mindestens einen eine Anode enthaltenden Anodenraum und einen eine Kathode enthaltenden Kathodenraum und vorzugsweise eine den Anodenraum und den Kathodenraum voneinander trennendes Diaphragma aufweist, geleitet. Die Flüssigkeit wird spätestens in der Wirbelschichtelektrolysezelle mit Wirbelpartikeln, die bei ihrer Berührung mit den Elektroden der Elektrolysezelle elektrische Ladungen aufnehmen können, vermischt. Nach dem elektrolytischen Behandeln wird die Flüssigkeit wieder von diesen Wirbelkörpern getrennt. Die gewünschten und vorgegebenen Werte, Redoxpotential und pH⁺-Wert, werden durch zwei Regelgrößen eingestellt. Erstens wird an die Elektrolysezelle eine elektrische Spannung angelegt, die in den Elektrolyten im Anoden- und im Kathodenraum einen bestimmten, davon abhängigen elektrischen Strom fließen läßt. Zweitens wird die Durchströmungsgeschwindigkeit des Anolyten im Anodenraum und diejenige des Katholyten im Kathodenraum unabhängig voneinander geregelt. Durch Abstimmen der Durchströmungsgeschwindigkeit der Flüssigkeit sowohl im Anodenraum als auch im Kathodenraum und durch darauf abgestimmtes Einregeln der an die Zelle angelegten elektrischen Spannung können sowohl im Anolyten als auch im Katholyten gezielt bestimmte elektrochemische Reaktionen durchgeführt und damit das Redoxpotential und der pH⁺-Wert in diesen Flüssigkeiten gezielt eingestellt und sie dadurch für ihre Verwendung für nachgeschaltete Reaktionen optimiert werden. Hierzu wird das Redoxpotential und/oder der pH⁺-Wert der in den Räumen der Elektrolysezelle zu behandelnden Flüssigkeit kontinuierlich gemessen und es wird in Abhängigkeit von diesen Werten ständig der Volumenstrom der Flüssigkeit und die an der Zelle anliegende elektrische Spannung und damit der Zellenstrom so eingeregelt, daß die für die im nachgeschalteten Verfahrensschritt erforderlichen Werte für das Redoxpotential und/oder den pH⁺-Wert eingestellt werden. Wird beispielsweise in einer Flüssigkeit bzw. in einem Elektrolyten eine große Änderung des Redoxpotentials und des pH⁺-Wertes gewünscht, so muß der Volumenstrom dieser Flüssigkeit bzw. dieses Elektrolyten niedrig eingestellt werden. Wird eine geringe Änderung gewünscht, so gilt das Umgekehrte. Die bei diesem Prozeß ablaufenden elektrochemischen Umsätze sind dem durch die angelegte elektrische Spannung hervorgerufenen elektrischen Strom direkt proportional.

In den vorgenannten Druckschriften DE-A 39 21 180 und DE-A 35 07 626 ist nicht beschrieben oder nahegelegt worden, daß in mit Schadstoffen belasteten Flüssigkeiten nach dem erfindungsgemäßen Verfahren gezielt ein solches Redoxpotential und ein solcher pH⁺-Wert eingestellt werden kann, daß diese Flüssigkeiten in einem bestimmten, nachgeschalteten Prozeß nutzbringend verwendet werden können. Diese Schriften enthalten ferner nicht, daß ein sehr schnelles Einstellen des Redoxpotentials und des pH⁺-Werts auf die Erfordernisse des nachgeschalteten Verwendungszwecks für die Flüssigkeit dadurch geschehen kann, daß eine meßtechnische Rückkopplung zwischen der Flüssigkeit und dem System, in dem diese nach dem Einregeln des Redoxpotentials und des pH⁺-Werts verwendet werden soll, besteht. Desweiteren finden sich in den zwei vorgenannten Schriften des Standes der Technik keine Hinweise auf eine Verwendung einer Wirbelschichtelektrolysezelle. Mit einer derartigen Zelle kann der erfindungsgemäße Prozeß jedoch besonders schnell und auch über lange Zeiten störungsfrei durchgeführt werden.

Gemäß der Erfindung ist es möglich, nur eine Flüssigkeit in der Elektrolysezelle zu behandeln. Nach einer Variante kann dabei die Flüssigkeit in zwei Teilströme aufgeteilt werden, von denen der eine den Anolyten und der andere den Katholyten bildet oder es kann einer anderen Variante gemäß die Flüssigkeit ohne vorheriges Teilen zuerst durch den Kathoden- und dann durch den Anodenraum oder umgekehrt, zuerst durch den Anoden- und dann durch den Kathodenraum geführt werden.
Bevorzugt werden der Elektrolysezelle zwei verschiedene Flüssigkeiten zugeführt, von denen die eine den Kathoden- und die andere den Anodenraum durchströmt. In vielen Fällen hat hierbei die Flüssigkeit, die den Anodenraum durchströmen soll ein anderes Redoxpotential und einen anderen pH⁺-Wert als die Flüssigkeit, die den Kathodenraum durchströmen soll.

Die Erfindung umfaßt nicht nur die Verwendung von nur einer Elektrolysezelle. Wenn die Kapazität einer Elektrolysezelle nicht ausreicht oder andere Gründe dafür sprechen, können auch mehrere Elektrolysezellen verwendet werden, die in Abhängigkeit von den jeweiligen Erfordernissen parallel - oder hintereinandergeschaltet sind.

Im Anodenraum der Elektrolysezelle werden dem Anolyten und den diesen bildenden Substanzen Elektronen entzogen. Dies entspricht einer Oxidation. Die typischen Reaktionen im Anodenraum sind demgemäß die Oxidation von Halogeniden zu freien Halogenen oder darüber hinaus zu Anionen der Oxosäuren der Halogene und/oder die oxidative Zerstörung von organischen Verbindungen. Letzteres hat für das hier beschriebene Verfahren besondere Bedeutung, da dadurch organische Hologenverbindungen und besonders toxische Dioxine und Furane in unschädliche Verbindungen gespalten oder letztlich auch völlig zerlegt werden können. Bei entsprechend negativem Potential wird Sauerstoff infolge einer Wasserzersetzung freigesetzt. Mit diesen Reaktionen geht eine Erhöhung des Redoxpotentials und eine Erniedrigung des pH⁺-Wertes einher. Bei in der Flüssigkeit löslichen aber flüchtigen oder sonst leicht entfernbaren Reaktionsprodukten hängen Redoxpotential und pH⁺-Wert ferner davon ab, ob man die gelösten Substanzen in der Flüssigkeit beläßt oder ob man sie zum Teil oder weitgehend aus der Flüssigkeit entfernt. Dies hat speziell beim Freisetzen von Halogenen Bedeutung und muß als zusätzliche Regelgröße beim Einstellen des Redoxpotentials beachtet werden.
Im Kathodenraum werden dem Katholyten Elektronen zugeführt, es finden also Reduktionsreaktionen statt. Für das hier beschriebene Verfahren sind in diesem Zusammenhang besonders das Freisetzen von Wasserstoff aus H⁺-Ionen, das Abscheiden von Schwermetallen in elementarer Form wie beispielsweise Quecksilber, Kupfer, Cadmium oder Blei aus ihren positiv geladenen Ionen und/oder die reduktive Zerstörung von organischen Verbindungen von Bedeutung. Auf die Bedeutung der Möglichkeit zum Abbau toxischer organischer Verbindungen für dieses Verfahren wurde im Vorstehenden bereits eingegangen. Als Folge dieser Reaktionen wird das Redoxpotential der so behandelten Flüssigkeit gesenkt und der pH⁺-Wert erhöht. Die Metalle scheiden sich auf den kathodisch gepolten Wirbelkörpern ab oder fallen z.B. als Hydroxide oder Oxidhydrate aus und können aus den Wirbelkörpern und aus den ausgefallenen Substanzen durch entsprechende, bekannte Aufbereitungsverfahren wiedergewonnen werden.
Durch Regeln der elektrischen Zellenspannung und durch Regeln der Volumenströme im Anoden- und im Kathodenraum kann eingestellt werden, welche der im Anoden- und welche der im Kathodenraum jeweils möglichen elektrochemischen Reaktionen ablaufen, d.h., es wird auch vorbestimmt, welche der anodisch abscheidbaren und welche der kathodisch abscheidbaren Stoffe abgeschieden werden.

Vorzugsweise werden nach dem erfindungsgemäßen Verfahren Flüssigkeiten behandelt, die umweltschädliche Verunreinigungen in vergleichsweise geringen Konzentrationen und/oder in während des Verfahrensablaufes wechselnden Konzentrationen enthalten, d.h. solche Flüssigkeiten, bei denen direkte Verfahren zum Aufbereiten aus verfahrenstechnischen oder Kostengründen nicht angewendet werden und die nach dem Behandeln in der Wirbelschichtelektrolysezelle nutzbringend einem weiteren Verfahrenszweck zugeführt werden können. Eine solche Anwendung liegt z.B. darin, die Flüssigkeiten nach dem elektrolytischen Reinigungsprozeß entsprechend ihrem Redoxpotential und ihrem pH⁺-Wert in Gaswäschern zu verwenden. Das Verfahren kann aber auch wie im Falle von Abwässern aus Galvanisieranlagen, nur zum Reinigen verwendet werden. Sollten jedoch erfindungsgemäß behandelte Flüssigkeiten nicht für einen nachgeschalteten Verfahrensschritt verwendet werden sollen, können sie auch auf herkömmliche Weise durch Eindampfen, Sprühtrocknen oder ein anderes Verfahren aufbereitet werden.

Die Flüssigkeiten, die elektrolytisch behandelt werden sollen, enthalten vorzugsweise Halogene und/oder Halogenide und/oder organische Halogenverbindungen und/oder Dioxine und/oder Furane und/oder Schwermetallionen und/oder Schwermetallverbindungen und oder Schwebstoffe von wechselnder Zusammensetzung.

Die mittels des Verfahrens behandelten Flüssigkeiten sind insbesondere Abwässer aus Galvanisieranlagen, Sickerwässer aus Deponien, besonders Müll- oder Sondermülldeponien und Waschwässer aus Gaswaschanlagen, insbesondere aus Gaswaschanlagen von Rauchgasen aus Müllverbrennungsanlagen jeder Art.

Wie bereits generell beschrieben worden ist, können in der Elektrolysezelle anodisch Halogene freigesetzt werden. Je nach den im Anodenraum eingestellten Bedingungen kann entweder Chlor allein oder aber Brom und Jod und kein Chlor oder aber nur Jod abgeschieden werden. Wenn Chlor freigesetzt wird, werden die höheren Halogene Brom und Jod im wesentlichen zur Stufe des Bromats und Jodats oxidiert und bleiben in Lösung. Bei dieser Verfahrensweise erhält man eine Flüssigkeit mit einem besonders hohen Redoxpotential, da in ihr bei einem nachgeschalteten Verfahrensschritt sowohl das gelöste Chlor als auch das gelöste Bromat und Jodat oxidativ wirken. Eine solche Flüssigkeit ist beispielsweise dafür geeignet, in Gaswäschern gasförmiges und gelöstes Schwefeldioxid in Schwefelsäure und Sulfate oder in Gasform mitgeführtes Quecksilber in Hg²⁺ zu überführen. Andererseits ist es auch möglich, bei oder nach der elektrolytischen Behandlung einen Teil des Chlors zu entfernen und anderweitig nutzbringend, beispielsweise zum Herstellen von HCl oder HCl-Lösungen oder als Chlorierungsmittel zu verwenden.
Brom und Jod, Verbindungen dieser Halogene oder Bromide und Jodide sind, wenn sie in Flüssigkeiten auftreten, die nach dem erfindungsgemäßen Verfahren behandelt werden sollen, einerseits umweltrelevante Schadstoffe, die zudem Anlagenteile korrosiv angreifen und schädigen, andererseits aber auch Wertstoffe. Man kann sie wie oben ausgeführt worden ist, in höhere Oxidationsstufen überführen und dann ihr Oxidationspotential nutzen oder man kann sie durch Einstellen eines bestimmten Potentials in Verbindung mit einem bestimmten Volumenstrom der Flüssigkeit elektrolytisch in elementarer Form abscheiden ohne daß Chlor mit entbunden wird und kann in nachgeschalteten Verfahrensschritten ihr milderes Oxidationspotential nutzen oder sie auf bekannte Weise in elementarer Form aus dem Anolyten isolieren.
In entsprechender Weise kann auch selektiv Jod in der Flüssigkeit erzeugt und einer Verwendung zugeführt werden.

Die Verwendung des erfindungsgemäßen Verfahrens für das Behandeln von Waschwässern von Gaswaschanlagen ist eine besonders bevorzugte Variante der Erfindung. Nach einer Untervariante der Erfindung können Anolyt und Katholyt wie dies bereits grundsätzlich für das Behandeln von unter die Erfindung fallenden Flüssigkeiten im Vorstehenden beschrieben worden ist, aus demselben Wäscher oder derselben Wäschergruppe stammen. Dabei durchströmt das Waschwasser zuerst den Kathodenraum und danach den Anodenraum oder umgekehrt oder es durchströmen Teilströme des Waschwassers parallel den Anoden- und den Kathodenraum.

Nach einer anderen Untervariante der Erfindung stammen Anolyt und Katholyt aus verschiedenen Wäschern einer Gaswaschanlage. Naturgemäß haben die Waschwässer aus den verschiedenen Wäschern auch unterschiedliche Zusammensetzungen und Inhaltsstoffe. So kann eins der Waschwässer stärker sauer und das andere schwach sauer bis neutral reagieren oder - und dies ist wieder eine bevorzugte Untervariante der Erfindung - eins der Waschwässer sauer und das andere alkalisch bis neutral reagieren. Vorzugsweise wird die aus dem "sauren" Wäscher stammende Flüssigkeit, die nach ihrem Behandeln im Anodenraum der Elektrolysezelle auf ein bestimmtes großes Redoxpotential und einen niedrigen pH⁺-Wert eingestellt worden ist, als reaktive Flüssigkeit wieder in den "sauren" Wäscher und die Flüssigkeit aus dem "neutralen bis alkalischen" Wäscher, die nach ihrem Behandeln im Kathodenraum auf ein bestimmtes niedriges Redoxpotential und einen bestimmten, vergleichsweise hohen pH⁺-Wert, d.h. alkalisch, eingestellt worden ist, als reaktive Flüssigkeit wieder in den "neutralen bis alkalischen" Wäscher zurückgeführt.
Wo dies für die Verfahrensführung zweckmäßig ist, kann nur ein Teil der aus dem Wäscher oder den Wäschern abgezogenen Waschflüssigkeiten behandelt und der verbleibende Teil in den Wäscher oder in die Wäscher unbehandelt im Kreislauf zurückgeführt werden. Der in der Elektrolysezelle behandelte Teil kann dem Wäscher oder den Wäschern wieder zugeführt werden oder mindestens ein Teil davon entweder in einen Zwischentank oder Pufferbehälter geleitet oder für einen anderen Zweck verwendet werden. Es ist aber auch möglich, daß nur der Anolyt in einen Wäscher zurückgeführt wird und der Katholyt in anderer Weise als als Waschflüssigkeit weiterverwendet wird und umgekehrt.

Zweckmäßigerweise ist in der bei dem erfindungsgemäßen Verfahren verwendeten Elektrolysezelle der Anodenraum von dem Kathodenraum durch ein Diaphragma getrennt. Dieses Diaphragma kann in verschiedener Weise ausgebildet sein. Es kann einmal für die durch den Anoden- und den Kathodenraum strömenden Flüssigkeiten und mithin auch für die in diesen Flüssigkeiten gelösten Substanzen und Ionen oder es kann nach einer zweiten Variante nur für die in den Flüssigkeiten vorhandenen Ionen oder es kann gemäß einer dritten Variante selektiv für bestimmte Ionen wie beispielsweise die Protonen durchlässig sein.

Nach einer weiteren Variante der Erfindung stehen Anolyt und Katholyt unter verschiedenen Drücken. Dies ist dann von Vorteil oder sogar notwendig, wenn bei Durchführung des Verfahrens mit einem flüssigkeitsdurchlässigen Diaphragma verhindert werden muß, daß bestimmte reaktive Komponenten zusammenkommen, die in den im Anoden- und im Kathodenraum strömenden Flüssigkeiten vorhanden sind. Beispielsweise muß der Katholyt einen höheren Flüssigkeitsdruck als der Anolyt haben, wenn die Gefahr besteht, daß im Anolyten entbundenes und deshalb in ihm gelöstes Chlor durch das Diaphragma in den Katholyten wandert und dort nach dem Übertritt in die Gasphase mit kathodisch abgeschiedenem Wasserstoff ein explosives Gemisch bildet.

Für das Durchführen des Verfahrens können verschiedene bekannte Wirbelschichtelektrolysezellen verwendet werden.

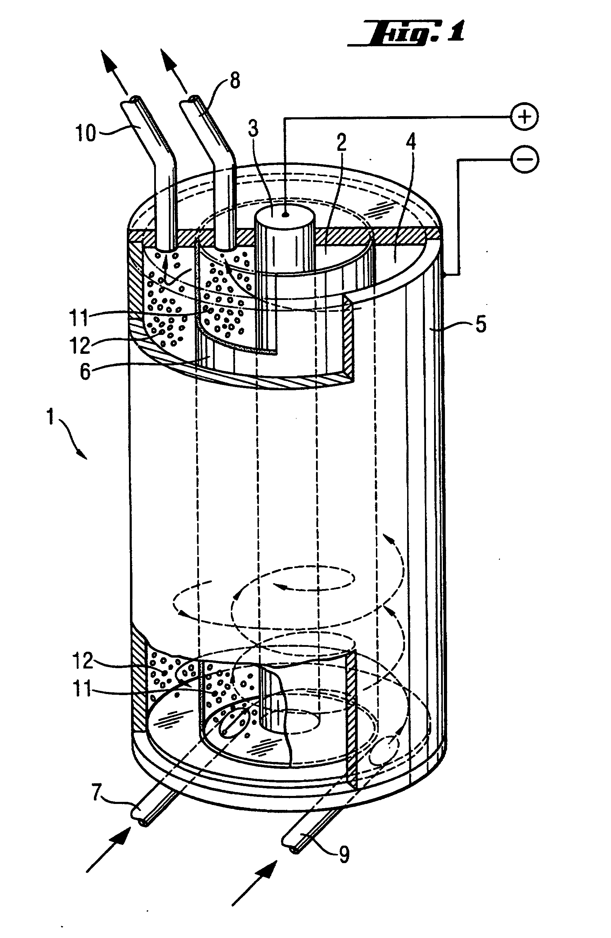

Als besonders vorteilhaft hat sich eine Wirbelschichtelektrolysezelle erwiesen, die im folgenden unter Zuhilfenahme von Fig. 1, die eine solche Zelle lediglich schematisch und beispielhaft in einer teilweise aufgebrochenen Ansicht wiedergibt, beschrieben wird. Diese Wirbelschichtlektrolysezelle ist nicht nur für das hier beschriebene, erfindungsgemäße Verfahren, sondern auch für alle anderen, nach dem Elektrolyseprinzip arbeitenden Verfahren geeignet. Besonders vorteilhaft ist dieser Zellentyp bei der Verwendung von Elektrolytflüssigkeiten mit Gehalten an festen Verunreinigungen oder Schlämmen, die in allen bekannten Elektrolyseanlagen die aktiven Oberflächen belegen und blockieren und deshalb mit diesen entweder gar nicht oder nur mit großen Schwierigkeiten behandelt werden können.

Die Zelle 1 hat im Anodenraum 2 eine Anode 3, im Kathodenraum 4 eine Kathode 5 und zwischen dem Anoden- 2 und dem Kathodenraum 4 ein Diaphragma 6, das den Anoden- 2 von dem Kathodenraum 4 trennt. Sie hat ferner eine Zu-7 und eine Ableitvorrichtung 8 für den Anolyten und eine Zu- 9 und eine Ableitvorrichtung 10 für den Katholyten, wobei diese Vorrichtungen zum zu- und Ableiten 8; 10 so ausgelegt sein müssen, daß mit dem Anolyten und dem Katholyten auch die in diesen befindlichen Wirbelkörper 11, 12 zur Zelle 1, durch die Zelle 1 hindurch und von der Zelle 1 weg befördert werden können.
Anode und Kathode haben entweder beide eine zylindermantelförmige Gestalt oder eine von beiden hat wie dies in Fig.1 gezeigt worden ist, eine zylinderförmige Gestalt und die jeweils andere eine zylindermantelförmige Gestalt. Die Formen von Anode und Kathode müssen nicht genau einem Zylinder oder/und einem Zylindermantel entsprechen, obwohl derartige Formen bevorzugt sind. Statt kreis- oder kreisringförmiger Querschnitte können sie z.B. auch ovale Querschnitte aufweisen, also auch die Form elliptisch deformierter Zylinder oder Zylindermäntel annehmen. Die Kathode 5 umgibt die Anode 3 oder umgekehrt die Anode die Kathode und zwischen der Kathode 5 und der Anode 3 befindet sich im Abstand von der Kathode 5 und im Abstand von der Anode 3 ein Diaphragma 6, das in seiner Gestalt, nicht aber in seinen Abmessungen der in der Zelle 1 außen befindlichen Elektrode entspricht, also eine im wesentlichen zylindermantelförmige Gestalt hat. Das Diaphragma ist vorteilhafterweise durch ein Stützgitter verstärkt. Zwischen der Anode 3 und dem Diaphragma 6 befindet sich demgemäß ein im wesentlichen zylindermantelförmiger Anodenraum 2 und zwischen der Kathode 5 und dem Diaphragma 6 ein im wesentlichen zylindermantelförmiger Kathodenraum 3. Aus Vorstehendem folgt, daß die Anode und Kathode unterschiedliche Dimensionen haben. Dies bedeutet nicht, daß Kathode und Anode stets ungleiche elektrisch aktive Oberflächen haben müssen. Durch Wahl unterschiedlicher Höhen können für beide gleiche aktive Flächen hergestellt werden. Vorzugsweise haben Kathode und Anode jedoch gleiche Höhen und damit unterschiedliche aktive Oberflächen. Nach einer anderen bevorzugten Ausführungsform sind Anode 3, Kathode 5 und das Diaphragma 6 konzentrisch zueinander angeordnet und nach einer weiteren bevorzugten Ausführungsform hat die Anode 3 einen kreisförmigen und die Kathode 5 und das Diaphragma 6 einen kreisringförmigen Querschnitt, d.h. die Anode 3 ist in der Mitte der Zelle 1 angeordnet, dann folgt der Anodenraum 2, dann das Diaphragma 6, auf dieses der Kathodenraum 3 und nach außen an diesen anschließend die Kathode 5. Anode und Kathode können aus jedem geeigneten Material, beispielsweise einem korrosionsfesten Metall oder einer korrosionsfesten Metallegierung sein. Der Fachmann wählt den geeigneten Werkstoff gemäß der zu erwartenden Beanspruchung aus. Nach einer bevorzugten Ausführungsform bestehen sowohl Anode als auch Kathode als auch die Wirbelkörper aus Graphit.

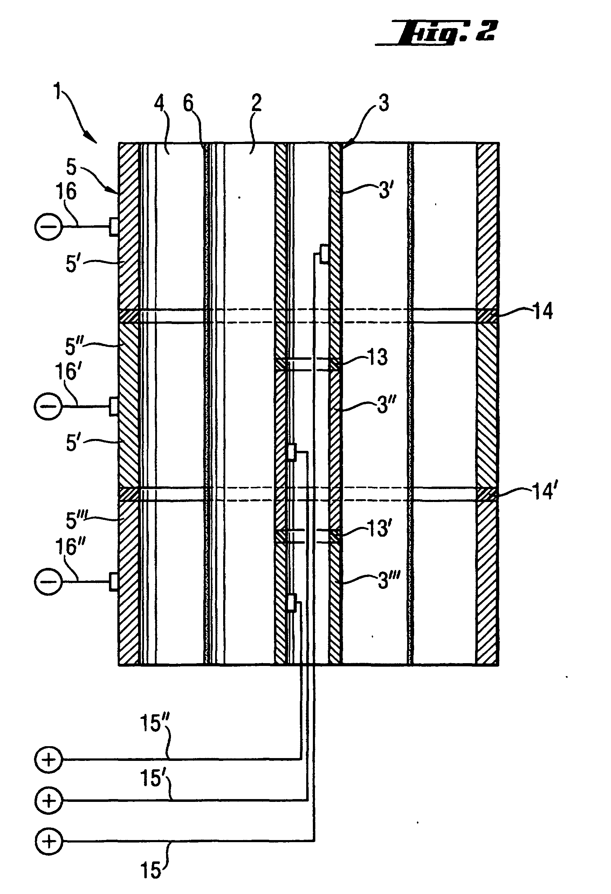

Bei einer Variante der im Vorstehenden beschriebenen Wirbelschichtelektrolysezelle, die im Folgenden unter Zuhilfenahme der Fig. 2, die diese Zellenvariante in einem Vertikalschnitt zeigt, beschrieben wird, bestehen die Anode 3 und die Kathode 5 aus zylinder- oder zylindermantelförmigen Segmenten 3'; 3''; 3'''; 5'; 5''; 5''', die horizontal übereinander liegen und bei denen zwischen benachbarten Segmenten gasdichte und elektrisch isolierende Dichtungen 13; 13'; 14; 14' angeordnet sind. Hier verwendete Dichtungen können beispielsweise aus Viton®, aus einem perfluorierten Kunststoff oder aus Perbunan® bestehen. Im vorliegenden Fall ist die Anode 3 zylindermantelförmig. Die Anoden- 3'; 3''; 3''' und die Kathodensegmente 5'; 5''; 5''' sind, was nicht dargestellt ist, miteinander verspannt. Jedes der Anoden- 3'; 3''; 3''' und der Kathodensegmente 5'; 5''; 5''' hat einen eigenen Stromanschluß (Anodensegmente: 15; 15'; 15''; Kathodensegmente: 16; 16'; 16''). Es ist dadurch möglich, jedes der Segmente 3'; 3''; 3'''; 5'; 5''; 5''' mit einer eigenen elektrischen Spannung zu versorgen, wodurch für jedes, durch diese Segmentierung geschaffene Volumensegment im Anoden- 2 wie im Kathodenraum 4 individuell abgestimmte Spannungs-/Stromverhältnisse eingestellt werden können. Dies ist dann von Bedeutung, wenn sich bei Einstellung gleicher Spannungswerte an allen Segmenten der Anode 3 oder der Kathode 5 oder an beiden 3; 5, bedingt durch die Strömungsverhältnisse im Anoden- 2 und/oder im Kathodenraum 4 in vertikaler Richtung Unterschiede in der Strom-/Spannungsverteilung in der behandelten Flüssigkeit einstellen. Durch segmentweises Regeln der Spannung können diese Unterschiede ausgeglichen und es kann der Wirkungsgrad der Zelle optimiert werden.
Anoden- 2 und Kathodenraum 4 sowie das Diaphragma 6 und die nicht dargestellte Zu- 7 und Ablaufvorrichtung 8 für den Anolyten und die ebenfalls nicht dargestellte Zu- 9 und Ablaufvorrichtung 10 für den Katholyten entsprechen den für die Elektrolysezelle in Fig. 1 gemachten Angaben. Es ist auch möglich, daß in einer so ausgebildeten Zelle nur die Anode oder nur die Kathode segmentiert ist. Anode 3, Kathode 5 und Diaphragma 6 können wie dies bei der Zelle mit nicht segmentierten Elektroden bereits beschrieben worden ist, auch Querschnitte haben, die in einem gewissen Grade von einer runden Form abweichen.

Gemäß einer weiteren vorteilhaften Gestaltung der Wirbelschichtelektrolysezellen dieser Erfindung sind die Vorrichtungen für den Flüssigkeitszulauf zum Anoden- und zum Kathodenraum und es sind die Vorrichtungen für den Flüssigkeitsablauf am Anoden- und am Kathodenraum so gestaltet und angeordnet, daß der Anolyt mit den in ihm enthaltenen Wirbelkörpern den Anodenraum und der Katholyt mit den in ihm enthaltenen Wirbelkörpern den Kathodenraum mit einer spiralförmigen Bewegung von unten nach oben durchströmt. Auf diese Weise werden die Wirbelkörper immer wieder mit den Oberflächen der Anode bzw. der Kathode und gleichermaßen untereinander in Berührung gebracht, wodurch sie die für die Durchführung der elektrochemischen Prozesse notwendigen Ladungen besser aufnehmen können. Außerdem beseitigt man damit die Probleme bezüglich des Aufrechterhaltens einer konstanten Wirbelschicht in einem System, das mit wechselnden Strömungsgeschwindigkeiten arbeitet.

Eine Elektrolyseanlage zum gezielten Einstellen von Redoxpotentialen und/oder pH⁺-Werten von Füssigkeiten ist stets mit solchen Anlagen gekoppelt, von denen die Flüssigkeiten, die in der Elektrolyseanlage behandelt werden sollen, geliefert werden. Dies sind insbesondere aber nicht ausschließlich, Galvanisieranlagen, Anlagen zum Sammeln und Aufbereiten von Deponieab- und -Sickerwässern und Gaswaschanlagen. Die elektrolytisch zu behandelnden Flüssigkeiten, die in diesen Anlagen anfallen, werden der Elektrolyseanlage durch Rohrleitungen, gegebenenfalls unter Zwischenschaltung von Zwischen- oder Pufferbehältern zugeführt und nach der Behandlung in dieser Elektrolyseanlage wiederum mittels Rohrleitungen unter eventueller Zwischenschaltung von Zwischen- oder Pufferbehältern von der Elektrolyseanlage weg zum Ort ihrer weiteren Verwendung gefördert. Häufig sind die Flüssigkeiten, deren Redoxpotential und pH⁺-Wert eingestellt werden soll, über die Elektrolyseanlage in Kreisläufen geführte Teilströme aus Anlagen zum Behandeln von mit Schadstoffen belasteten Flüssigkeiten und Gasen.
Eine erfindungsgemäße Elektrolyseanlage besteht mindestens aus den folgenden Komponenten:
- mindestens einer Wirbelschichtelektrolysezelle gemäß Ansprüchen 25-30 mit einem eine Anode enthaltenden Anoderaum, einem eine Kathode enthaltenden Kathodenraum, einem zwischen der Anode und der Kathode angeordneten Diaphragma, durch das der Anoden- von dem Kathodenraum getrennt wird, einer Spannungsquelle, elektrischen Leitungen und Anschlußvorrichtungen zum Versorgen der Anode und der Kathode mit elektrischer Spannung und an den Anoden- und den Kathodenraum angeschlossene Zu- und Ableitvorrichtungen für den Anolyten und den Katholyten;
- Vorrichtungen wie Behälter, Rohrleitungen, Pumpen sowie Meß- und Regeleinrichtungen zum geregelten Zuführen von Wirbelkörpern zur Anolyt- und zur Katholytflüssigkeit, zum geregelten Zuführen der Anolyt- und der Katholytflüssigkeit einschließlich der in diesen enthaltenen Wirbelkörper zum Anoden- und zum Kathodenraum der Elektrolysezelle, zum Durchströmen des wirbelkörperhaltigen Anolyten durch den Anodenraum und zum Durchströmen des wirbelkörperhaltigen Katholyten durch den Kathodenraum, zum Abführen des Anolyten und des Katholyten aus der Elektrolysezelle, zum Abtrennen der Wirbelkörper vom Anolyten und vom Katholyten und zum Weiterleiten der Flüssigkeiten in nachgeschaltete Reaktoren oder Behälter;
- Zu- und Abführeinrichtungen für den elektrischen Strom an der Anode und an der Kathode,
   Meßeinrichtungen zum Messen des elektrischen Zellenstromes, Meß- und Regeleinrichtungen zum Messen und Regeln der elektrischen Spannung sowohl an der Anode als auch an der Kathode, Meß- und Regeleinrichtungen zum Messen und Einstellen des Redoxpotentials und des pH⁺-Wertes der Anoden- und der Kathodenflüssigkeit durch 1. geregeltes Einstellen der Strömungsgeschwindigkeiten dieser Flüssigkeiten im Anoden- und im Kathodenraum und 2. durch geregeltes Einstellen der elektrischen Spannungen am Anoden- und am Kathodenraum, und damit Einstellen eines bestimmten Zellenstromes;
- Meß-, Regel- und Fördereinrichtungen für die den Anoden- und den Kathodenraum durchströmenden Flüssigkeiten, einschließlich der von diesen Flüssigkeiten mitgeführten Wirbelkörper.

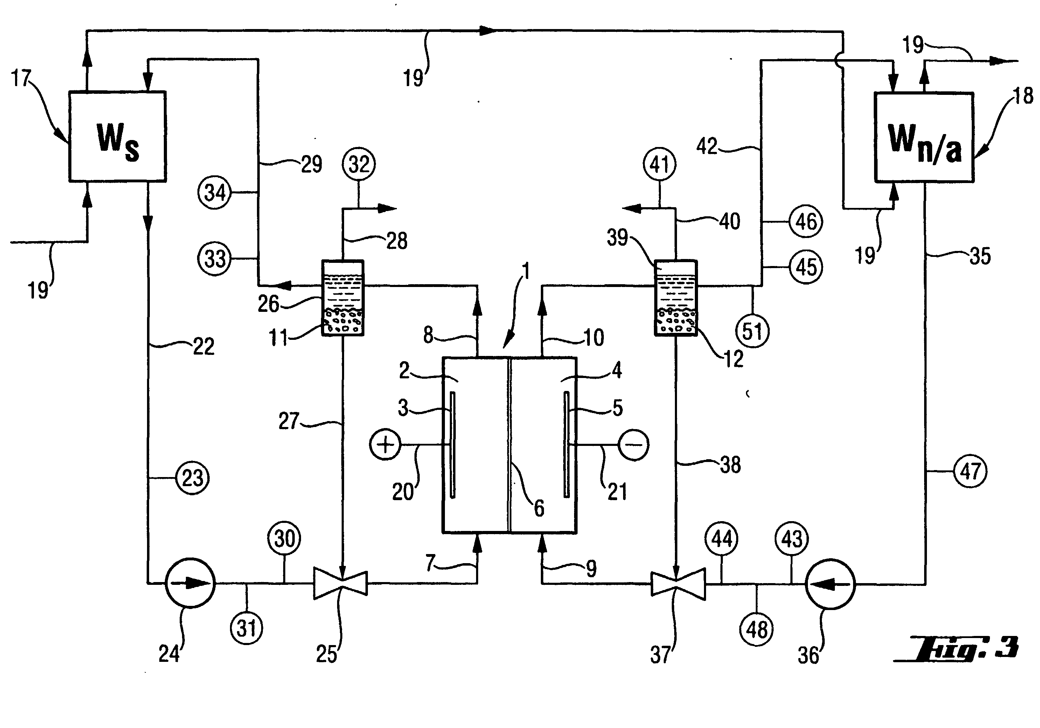

Als Beispiele werden im folgenden drei derartige Elektrolyseanlagen anhand der schematischen Darstellungen der Fig. 3, 4 und 5 beschrieben. In jeder dieser Figuren stammen alle Flüssigkeitsströme, die in der jeweiligen Elektrolyseanlage behandelt werden sollen, aus Rauchgaswäschern 17; 18. Sie werden zwischen den Wäschern und dem Anoden- bzw. dem Kathodenraum der jeweiligen Elektrolyseanlage im Kreislauf geführt. In großtechnisch betriebenen Anlagen würde in den meisten Fällen aus dem jeweiligen Rauchgaswäscher nur ein Teilstrom der Waschflüssigkeit für das Behandeln in der Elektrolysezelle abgezweigt und dem Wäscher nach der elektrochemischen Konditionierung am Kopf des Wäschers wieder zugesetzt werden. Der andere Teil der Waschflüssigkeit würde in einem zweiten Kreislauf umgepumpt und unterhalb der Aufgabeebene für die elektrolytisch konditionierte Waschflüssigkeit in den Wäscher zurückgeführt werden.
In der Anlage gemäß Fig. 3 stammen die in der Wirbelschichtelektrolysezelle 1 behandelten Flüssigkeiten aus zwei Rauchgaswäschern 17; 18 einer nicht wiedergegebenen Müllverbrennungsanlage, die wie die genannten Rauchgaswäscher 17; 18 nicht Bestandteil der erfindungsgemäßen Elektrolyseanlage ist. Das Rauchgas wird über die Gasleitung 19 zunächst durch den Wäscher 17, der mit einer sauren Waschflüssigkeit von hohem Redoxpotential betrieben wird, und dann weiter über die Rauchgasleitung 19 in den Wäscher 18, der mit einer neutralen bis vorzugsweise alkalischen Waschflüssigkeit von niedrigem Redoxpotential betrieben wird, geleitet. Auch diese Rauchgasleitung ist nicht Bestandteil der Elektrolyseanlage. Die lediglich schematisch dargestellte Elektrolysezelle 1, die eine Wirbelschichtelektrolysezelle des vorstehend für diese Erfindung beschriebenen Typs ist, hat einen Anodenraum 2, eine Anode 3, ein Diaphragma 6, einen Kathodenraum 4, eine Kathode 5, eine Zuführvorrichtung für den Anolyten 7, eine Abführvorrichtung 8 für die anodisch behandelte Flüssigkeit, eine Zuführvorrichtung für den Katholyten 9, eine Abführvorrichtung 10 für die kathodisch behandelte Flüssigkeit, einen elektrische Versorgungsanschluß 20 für die Anode 3 und einen elektrischen Versorgungsanschluß 21 für die Kathode 5. Die Meß- und Regeleinrichtungen für die elektrische Spannung und die elektrische Stromstärke sind nicht wiedergegeben. Sie entsprechen Einrichtungen wie sie jeder Fachmann kennt.
Im folgenden werden die Vorgänge im Kreislauf der "sauren" waschflüssigkeit und der dazugehörende Anlagenteil beschrieben: Die im wesentlichen mit Schwefeldioxid, nitrosen Gasen, Sulfationen, Halogenwasserstoffsäuren, Halogeniden, organischen Verbindungen wie Dioxinen und Furanen, Schwermetallen und feinen Feststoffen belastete Waschflüssigkeit aus dem "sauren" Wäscher 17 wird über die Rohrleitung 22 der Pumpe 24 zugeführt. Von dieser Pumpe 24 gelangt die Flüssigkeit in eine Strahlpumpe 25, in der sie mit einer bestimmten Menge elektrisch aufladbarer Wirbelkörper 11, die der Strahlpumpe 25 zusammen mit einer geringen Menge Waschflüssigkeit aus dem Zwischen- und Abscheidebehälter 26 über die Rohrleitung 27 zugeführt werden, vermischt. Diese wirbelkörperhaltige Flüssigkeit wird nunmehr über die Anolytzuführung 7 in den Anodenraum 2 der Elektrolysezelle 1 gedrückt, wo die nicht wiedergegebenen Wirbelkörper durch immer wiederkehrende Berührung mit der Anode 3 und auch durch Stöße untereinander elektrische Ladungen aufnehmen. Sie können deshalb als eine bewegliche Anode angesehen werden. Durch die Anode und die anodisch geladenen Wirbelkörper wird der elektrolytische Prozeß in Gang gesetzt und im Zusammenwirken mit den Vorgängen im Kathodenraum 4 aufrechterhalten.
Dabei wird das Redoxpotential des Anolyten erhöht und sein pH⁺-Wert erniedrigt. Außerdem werden den elektrochemischen Bedingungen entsprechend Halogene freigesetzt, organische Verbindungen oxidativ abgebaut und Schwermetalle und/oder Schwermetallverbindungen oxidiert. Der Anolyt verläßt den Anodenraum 2 mit den in ihm enthaltenen Wirbelkörpern über die Rohrleitung 8 und gelangt in den Abscheide- und Sammelbehälter 26 für die Wirbelkörper 11. In diesem Behälter können auch anolytisch freigesetzte Halogene, die den Erfordernissen entsprechend aus der Waschflüssigkeit freigesetzt werden, über die Leitung 28 ab- und einer nutzbringenden Verwendung zugeführt werden. Die von den Wirbelkörpern 11 befreite und durch Einstellen des Gehalts an freien Halogenen endgültig bezüglich ihres Redoxpotentials konditionierte Flüssigkeit gelangt dann über die Rohrleitung 29 in den "sauren" Wäscher 17 zurück.

Zum Messen der wichtigsten Regelgrößen für das Einstellen des Redoxpotentials der Waschflüssigkeit im "sauren" Waschkreislauf sind folgende Meßstellen vorhanden: In der vom Wäscher 17 abführenden Rohrleitung 22 befindet sich im Bereich nach der regelbaren Pumpe 24 eine Meßstelle 30 für das Redoxpotential der aus dem Wäscher abfließenden Waschflüssigkeit. Gemessen wird mit einer Platin-Stift-Elektrode, die eine Ag/AgCl-Bezugselektrode hat. Vor der Pumpe 24 befindet sich eine Stelle zum Entnehmen von Proben der Waschflüssigkeit 23, an denen der Gehalt an mitgeführten Stoffen wie beispielsweise Halogeniden bestimmt wird. Zwischen der Pumpe 24 und der Strahlpumpe 25 ist in der Rohrleitung 22 ein Gerät 31 zum Messen des Volumenstromes der Waschflüssigkeit installiert. Nach der Elektrolysezelle ist in der Leitung 28, in der die freigesetzten Gase, im wesentlichen Halogene, abgeführt werden, eine Meß- bzw. eine Probenahmestelle 32 zum Bestimmen der Menge an abgeführten Halogenen. In der Leitung 29 zwischen dem Sammel- und Abscheidebehälter 26 und dem Wäscher 17 sind eine Meßstelle 33 zum Bestimmen des Redoxpotentials und eine Probenahmestelle 34 zum Bestimmen der Halogenidkonzentration der anodisch konditionierten Waschflüssigkeit installiert.

Das anodische Einregeln des Redoxpotentials geschieht folgendermaßen: An der Meßstelle 30 wird das Redoxpotential in der vom Wäscher 17 ablaufenden Waschflüssigkeit gemessen und mit dem entsprechenden, an der Meßstelle 33 in der Leitung der Waschflüssigkeit 29 zum Wäscher 17 gemessenen Wert verglichen. An der Abnahme des Redoxpotentials beim Durchgang der Waschflüssigkeit durch den Wäscher 17 wird der jeweilige Bedarf an Oxidationspotential im Wäscher 17 festgestellt. An den an den Probennahmestellen 23 und 34 entnommenen Flüssigkeitsproben wird insbesondere der Gehalt an Halogenidionen gemessen. Aus der Differenz der Halogenidkonzentration der abfließenden zu derjenigen im dem Wäscher 17 zufließenden Waschflüssigkeit wird festgestellt, wieviel Oxidationspotential durch Freisetzen von Halogenen anodisch maximal mobilisiert werden könnte und festgelegt, wieviel nach dem Abtrennen von Halogenen im Behälter 26 für den Wäscher 17 effektiv zur Verfügung stehen soll. Die aus dem Wäscher 17 abfließende Waschflüssigkeit darf einen bestimmten Minimalwert des Redoxpotentials nicht unterschreiten, da sonst die Gefahr besteht, daß bestimmte Oxidationsreaktionen nicht vollständig genug ablaufen und beispielsweise eine unerwünschte Emission von Schwefeldioxid stattfindet. Wenn nun die vorgenannten Messungen in der ablaufenden Waschflüssigkeit eine kritische Näherung an diesen unteren Wert des Oxidationspotentials anzeigen, wird das Redoxpotential der Waschflüssigkeit im Anodenraum 2 durch Einstellen geeigneter Strömungswerte im Anodenraum und ggf. durch Einstellen geeigneter Spannungswerte in der Elektrolysezelle soweit erhöht, bis das erforderliche Oxidationspotential in der dem Wäscher 17 zugeführten Waschflüssigkeit wieder erreicht ist. Die Flüssigkeitsströmung wird dabei durch die regelbare Pumpe 24 und die Spannungs/Stromwerte werden durch nicht wiedergegebene bekannte Regel- und Meßgeräte eingestellt. Zum Einstellen der Strömungsgeschwindigkeit wird der Volumenstrom der Flüssigkeit an der Meßstelle 31, die sich zwischen der Pumpe 24 und der Strahlpumpe 25 befindet, gemessen. Wenn die Strömungsgeschwindigkeit zu gering ist, wird die Leistung der Pumpe 24 erhöht, ist die Strömungsgeschwindigkeit zu hoch, wird die Leistung dieser Pumpe 24 entsprechend erniedrigt.

Ein Messen des pH⁺-Wertes im Kreislauf der sauren Waschflüssigkeit für Regelzwecke ist nicht sinnvoll, da dieser, bedingt durch die im Wäscher (17) ablaufenden Reaktionen wie beispielsweise die Bildung von Schwefelsäure und Halogenwasserstoffsäuren immer bei 1 oder niedriger liegt.

Im folgenden werden die Vorgänge im Kreislauf der "neutralen bis alkalischen" Waschflüssigkeit und die dazugehörenden Anlagenteile beschrieben:
Die Rauchgase, die den "sauren" Wäscher 17 über die Rohrleitung 19 verlassen, werden in den zweiten Wäscher 18, der mit einer alkalischen bis höchstens neutralen Waschflüssigkeit betrieben wird, geleitet. Zweck dieses Wäschers 18 ist es, sauer reagierende Substanzen, die von dem Rauchgas nach dem Wäscher 17 in Gasform mitgeführt werden, zu entfernen oder zu zerlegen. Es handelt sich hier vor allem um Halogenwasserstoffe, freie Halogene, metallhaltige Dämpfe, Spuren von Schwefeldioxid, nitrose Gase und organische Verbindungen wie toxische Dioxine und/oder Furane. Nach einer nicht dargestellten Variante können der Kathodenflüssigkeit auch bestimmte Mengen Waschflüssigkeit aus dem Anodenkreislauf zugeführt werden, wenn sich in diesem eine vergleichsweise große Konzentration an Schwermetallsalzen angesammelt hat, deren Metallionen auf den an der Kathode 5 elektrisch aufgeladenen Wirbelkörpern entladen und abgeschieden und nach deren Aufbereitung zurückgewonnen werden können. Nach einer weiteren, ebenfalls nicht dargestellten Variante des Verfahrens, können Teilmengen des Waschwassers aus dem Kathodenkreislauf, die sich mit größeren Mengen an Halogeniden angereichert haben, zum Gewinnen der Halogene in den Anodenkreislauf zurückgeführt werden.

Im vorliegenden Fall der Fig. 3 wird die gesamte Waschflüssigkeit, die aus dem Wäscher 18 kommt, durch die Rohrleitung 35 einer regelbaren Pumpe 36 zugeführt. Von dieser wird sie mit einem auf einen bestimmten Wert eingestellten Druck durch die Strahlpumpe 37 gepreßt. In der Strahlpumpe 37 wird die Flüssigkeit mit elektrisch aufladbaren Wirbelkörpern 12 vermischt, die der Strahlpumpe 37 über die Rohrleitung 38 aus dem Abscheide- und Sammelgefäß 39 zusammen mit einer geringen Menge bereits behandelter Flüssigkeit zugeführt werden. Der wirbelkörperhaltige Katholyt wird sodann dem Kathodenraum 4 der Elektrolysezelle 1 über die Zulaufvorrichtung 9 zugeführt. Dort erhalten die Wirbelkörper durch Stöße mit der Kathode, die auf ein bestimmtes elektrisches Potential eingestellt worden ist und auch durch Stöße untereinander die elektrischen Ladungen, mit Hilfe derer im Kathodenraum 4 im Zusammenwirken mit der Strömungsgeschwindigkeit ein bestimmtes Reduktionspotential und ein bestimmter, hoher pH⁺-Wert eingestellt werden können. Dabei wird gasförmig Wasserstoff und es werden auf den Wirbelkörpern Metalle wie Cu, Cr, Pb oder Hg abgeschieden und es können wie in Beispiel 5 gezeigt werden wird, toxische organische Verbindungen unschädlich gemacht werden. Der Katholyt verläßt den Kathodenraum 4 der Elektrolysezelle 1 über die Abführvorrichtung 10 und gelangt in den Sammel- und Abscheidebehälter 39. In diesem wird die kathodisch konditionierte Waschflüssigkeit von gasförmigem Wasserstoff und von den Wirbelkörpern 12 getrennt. Der Wasserstoff verläßt den Behälter 39 über die Rohrleitung 40, in der mittels der Meßstelle 41 die Menge abgeführten Wasserstoffs gemessen wird. Er wird danach als Wertstoff weiterverwendet. Die Waschflüssigkeit wird sodann über die Rohrleitung 42 in den Wäscher 18 zurückgeführt.

Zum Einstellen des Redoxpotentials und des pH⁺-Wertes der Waschflüssigkeit im kathodischen Kreislauf werden zuerst das Redoxpotential und der pH⁺-Wert der aus dem Wäscher 18 abgeführten Waschflüssigkeit an den Meßstellen 43 und 44, die sich hier zwischen der Pumpe 36 und der Strahlpumpe 37 befinden, gemessen. Entsprechend werden Redoxpotential und pH⁺-Wert für die im Kathodenraum 4 konditionierte Waschflüssigkeit an den Meßstellen 45 und 46, die hinter dem Abscheide- und Sammelbehälter 39 und vor dem Wäscher 18 angebracht worden sind, gemessen. Wenn nun das Redoxpotential im vom Wäscher 18 ablaufenden Waschwasser einen bestimmten Wert überschreitet und/oder der pH⁺-Wert in dieser Flüssigkeit einen bestimmten Wert unterschreitet, werden durch Einregeln der Strömungsgeschwindigkeit in Verbindung mit dem Einregeln einer bestimmten elektrischen Spannung zwischen Kathode 5 und Anode 3 und damit eines bestimmten Zellenstromes die erforderlichen Werte wieder eingestellt. Zum Einstellen der Strömungsgeschwindigkeit wird der Volumenstrom der Flüssigkeit an der Meßstelle 48, die sich zwischen der Pumpe 36 und der Strahlpumpe 37 befindet, gemessen. Wenn die Strömungsgeschwindigkeit zu gering ist, wird die Leistung der Pumpe 36 erhöht, ist die Strömungsgeschwindigkeit zu hoch, wird die Leistung dieser Pumpe 36 entsprechend erniedrigt.
In der Rohrleitung 35 befindet sich noch eine Probenahmestelle 47 für das Entnehmen von Flüssigkeitsproben zum Bestimmen der Art und des Gehalts an mitgeführten Stoffen wie Metallionen, speziell Schwermetallionen, Halogeniden oder organischen Verbindungen im Waschwasser. Falls die Abtrennung von Schwermetallionen oder einer bestimmten Art von Schwermetallionen aus der Lösung erforderlich ist, werden diese Ionen durch Einstellen der dafür erforderlichen elektrischen Potentiale an der Kathode 5 auf den Wirbelkörpern entladen und auf ihnen abgeschieden. In alkalischen Milieu werden jedoch viele der Schwermetalle auch in Form von Hydroxiden und/oder Oxidhydraten ausgefallen sein und in Form feiner Teilchen von der Waschflüssigkeit mitgeführt werden. Die Metalle können nach dem Ausschleusen der Wirbelkörper aus dem Kreislauf, das kontinuierlich zusammen mit einem äquivalenten Ergänzen neuer Wirbelkörper geschehen kann, durch bekannte Verfahren aus den Wirbelkörpern gewonnen werden. Die aus der Flüssigkeit ausgefällten, teilchenförmigen Metallverbindungen werden durch geeignete Abscheidevorrichtungen aus der Waschflüssigkeit entfernt und gegebenenfalls weiter aufbereitet. In der Rohrleitung 42 befindet sich eine weitere Probennahmestelle 51 für das Entnehmen von Flüssigkeitsproben zum Bestimmen der Art und des Gehalts an in der Waschflüssigkeit verbliebenen Stoffen.

In dem mit heißen Rauchgasen beschickten "sauren" Wäscher 17 treten naturgemäß Flüssigkeitsverluste durch Verdampfen auf. Diese Flüssigkeitsverluste werden durch hier nicht dargestelltes Zuführen von Frischwasser oder/und durch Rückführen einer gewissen Menge von Flüssigkeit aus dem "neutralen bis alkalischen" Kreislauf ersetzt.

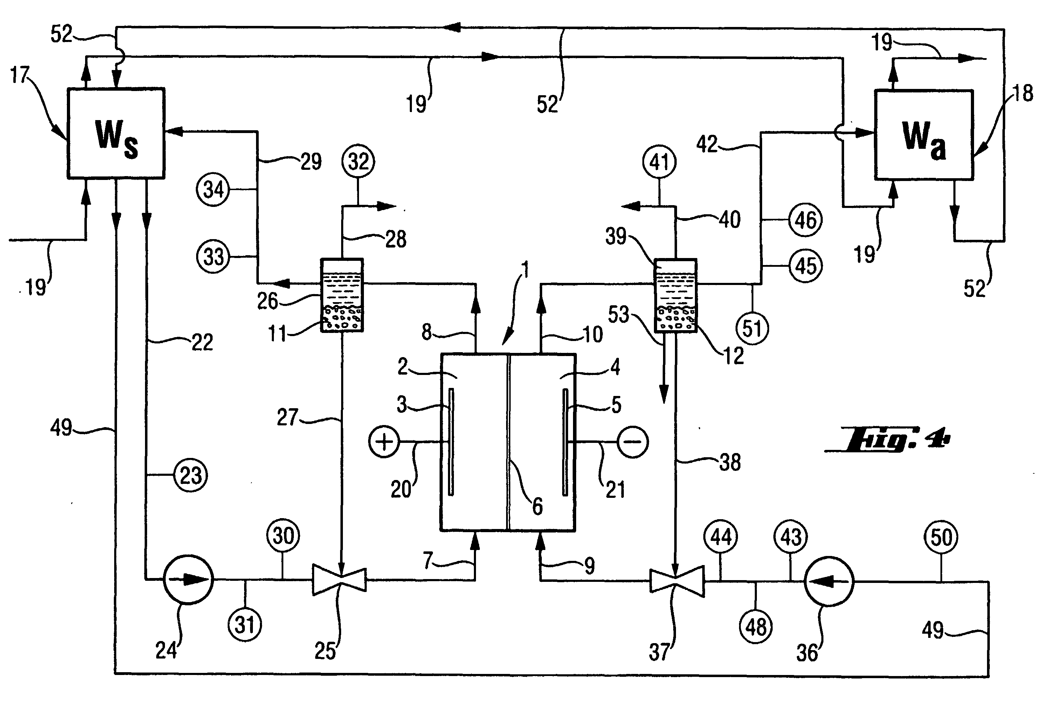

Das Schemabild der Fig. 4 gibt eine Elektrolyseanlage wieder, bei der die Rauchgase wie in Fig. 3 zuerst durch einen Wäscher 17, in dem mit einer Flüssigkeit mit hohem Redoxpotential und niedrigem pH⁺-Wert gewaschen wird und dann durch einen "alkalischen" Wäscher 18, in dem mit niedrigem Redoxpotential und hohem pH⁺-Wert gearbeitet wird, geleitet werden. Die Rauchgasleitungen und die Wäscher 17; 18 sind auch hier nicht Teil der erfindungsgemäßen Elektrolyseanlage. Der Unterschied zur Anlage gemäß Fig. 3 besteht darin, daß im vorliegenden Fall ein Teilstrom der aus dem "sauren" Wäscher 17 ablaufenden Flüssigkeit über die Rohrleitung 49 und die Pumpen 36, 37 in den Kathodenraum 4 der Wirbelschichtelektrolysezelle 1 geleitet, dort auf ein niedriges Redoxpotential und einem hohen pH⁺-Wert eingestellt und von dort als Waschflüssigkeit in den "alkalischen bis neutralen" Wäscher 18 überführt wird. Der Teil der Elektrolyseanlage, der den anodischen Kreislauf der Waschflüssigkeit betrifft, ist mit dem entsprechenden Teil in Fig. 3 identisch. Es wird deshalb diesbezüglich auf die Beschreibung von Fig. 3 verwiesen. Eine Nutzanwendung der mit der Anlage gemäß Fig. 4 möglichen Verfahrensweise ist es, daß ein Teil der im "sauren" Wäscher 17 abgeschiedenen und gelösten Schwermetalle mit dem Teilstrom der Waschflüssigkeit, der dem Kathodenraum 4 der Elektrolysezelle 1 zugeleitet wird, ständig aus dem Wäscher 17 entfernt wird und sich in dessen Waschwasserkreislauf nicht anreichern kann. Ein Teil dieser Schwermetalle wird auf den Wirbelkörpern im Kathodenraum 4 der Elektrolysezelle 1 abgeschieden und ein anderer Teil fällt in dem neutralen bis alkalischen Milieu dieses Waschwasserkreislaufes in Form von Hydroxiden oder Oxidhydraten aus. Zum Abtrennen der metallhaltigen Körper und Substanzen kann ein Teil der Wirbelkörper und es können die metallhaltigen anderen Festsubstanzen beispielsweise aus dem Absetz- und Sammelbehälter 39 über die Leitung 53 abgezogen werden und aus diesen dann nach bekannten Verfahren die Metalle gewonnen werden. In den Rohrleitungen 49, 42, die die Waschflüssigkeit zum Kathodenraum 4 und von diesem 4 weiter in den "neutralen bis alkalischen" Wäscher 18 transportieren, befinden sich für das Bestimmen von Begleitstoffen, hier besonders des Schwermetallgehalts, zwei Probennahmestellen 50, 51. Die Probenahmestelle für die vom "sauren" Wäscher 17 zufließende Flüssigkeit 50 befindet sich vor der regelbaren Pumpe 36 und die Probenahmestelle für die kathodisch behandelte Flüssigkeit 51 zwischen dem Abscheide- und Sammelgefäß 39 und dem Wäscher 18. Zum Einstellen des Redoxpotentials und des pH⁺-Wertes im Kathodenraum 4 der Elektrolysezelle 1 werden das Redoxpotential und der pH⁺-Wert in der Flüssigkeit vor dem Kathodenraum 4 an den Meßstellen 43 (Redoxpotential) und 44 (pH⁺-Wert) und nach dem Kathodenraum an den Meßstellen 45 (Redoxpotential) und 46 (pH⁺-Wert) gemessen. Mit Hilfe dieser Meßwerte wird sodann die Leistung der Pumpe 36, durch die die gewünschte Strömungsgeschwindigkeit der Flüssigkeit im Kathodenraum 4 eingestellt wird, geregelt und es werden die erforderlichen Spannungs-/Stromwerte an der Elektrolysezelle 1 gesteuert. Der Volumenstrom der Flüssigkeit nach der Pumpe 36 wird an Stelle 48 gemessen und an die Regeleinrichtung weitergegeben. Der kathodisch entbundene Wasserstoff wird im Abscheide- und Sammelbehälter 39 gesammelt und über die Leitung 40 einer nutzbringenden Verwendung zugeführt. Die Menge abgegebenen Wasserstoffs wird an Meßstelle 41 gemessen. Die kathodisch konditionierte Waschflüssigkeit wird dem "neutralen bis alkalischen" Wäscher über die Rohrleitung 42 zugeführt. Aus dem Sumpf dieses Wäschers kann die gebrauchte Flüssigkeit - dies ist jedoch nicht mehr Gegenstand der erfindungsgemäßen Elektrolyseanlage nach Fig. 4 - beispielsweise über die Rohrleitung 52 in den "sauren" Wäscher 17 zurückgeleitet werden.

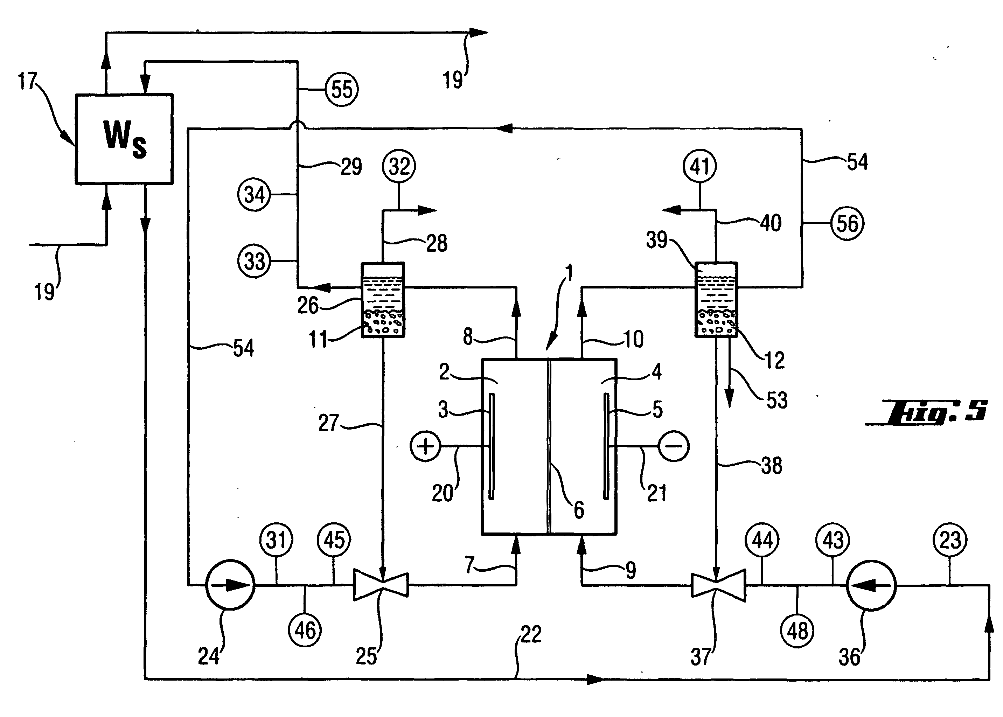

Fig. 5 gibt eine Elektrolyseanlage im Schemabild wieder, mit der vor allem einmal Schwermetalle, die sich in der Waschflüssigkeit des "sauren" Wäschers 17 mit der Zeit anreichern, kathodisch abgeschieden werden können und zum anderen die Waschflüssigkeit nach Passieren des Kathodenraumes 4 für die erste, saure Waschstufe der Rauchgase anodisch konditioniert werden kann. Der Wäscher 17 und die Rauchgasleitung 19 sind nicht Gegenstand der erfindungsgemäßen Elektrolyseanlage. Beim Betrieb dieser Elektrolyseanlage wird ein Teilstrom der aus dem Rauchgaswäscher 17 abfließenden Waschflüssigkeit - der Kreislauf des Hauptstromes ist hier nicht dargestellt - über die Rohrleitung 22 der vor dem Kathodenraum 4 der Wirbelschichtelektrolysezelle 1 befindlichen regelbaren Pumpe 36 zugeführt. Von der Pumpe 36 wird die Flüssigkeit durch die Strahlpumpe 37 gedrückt. In dieser Strahlpumpe 37 werden in die Flüssigkeit aus dem Abscheide- und Sammelbehälter 39 zusammen mit einer geringen Menge kathodisch behandelter Flüssigkeit über die Rohrleitung 38 elektrisch aufladbare Wirbelkörper in dem Maße eingebracht wie es die elektrochemischen Reaktionen im Kathodenraum 4 erfordern. Nach dem Eintritt der Waschflüssigkeit in den Kathodenraum 4 wird deren Redoxpotential stark erniedrigt und der pH⁺-Wert erhöht. Auf den Wirbelkörpern scheiden sich dabei elektrolytisch Schwermetalle ab und es wird Wasserstoff freigesetzt. Desweiteren werden auch Schwermetalle in Form von Hydroxiden und Oxidhydraten als feine Feststoffpartikel abgeschieden. Das Separieren eines Teils der mit Schwermetallen belegten Wirbelkörper und der ausgefallenen Schwermetallverbindungen geschieht wie dies in der Elektrolyseanlage nach Fig. 4 beschrieben worden ist. Die Schwermetallausfällungen und sonstige feste Verunreinigungen, die Schlämme bilden könnten, wirken sich in der erfindungsgemäßen Elektrolysezelle nicht nachteilig auf die elektrochemischen Prozesse aus. Infolge der Strömung der Flüssigkeit und wegen der ständigen Bewegungen der Wirbelkörper in der Flüssigkeit stoßen die Wirbelkörper ständig untereinander und mit der Kathode zusammen, wobei die Oberflächen aneinander reiben. Dadurch werden die Oberflächen der Wirbelkörper und der Kathode ständig gereinigt und aktiv gehalten und es werden die ausgefällten metallhaltigen Feststoffe als auch mitgeführte feste Verunreinigungen, die bei anderen Elektrolyseprozessen durch Verlegen der Elektroden zu schweren Störungen führen, in der Schwebe gehalten und aus dem Kathodenraum entfernt. Ein letztlich zum Stillstand des elektrolytischen Prozesses führendes Verschlämmen oder Verblocken der Oberfläche der Kathode oder der Wirbelkörper kann hier nicht stattfinden. Ein derartiges Verschlämmen oder Verblocken ist aber ein schwerwiegender Nachteil von Elektrolysezellen des Standes der Technik. Die hier für den Kathodenraum eingehend dargelegten Vorgänge zur Selbstreinigung finden in allen Elektrolyseräumen der erfindungsgemäßen Elektrolysezellen statt und sind darauf übertragbar. Die kathodisch behandelte Flüssigkeit verläßt die Elektrolysezelle 1 durch die Ablaufvorrichtung 10 für den Katholyten und gelangt dann in den Abscheide- und Sammelbehälter 39, in dem sie von den Wirbelkörpern, den Feststoffen und von gasförmigem Wasserstoff getrennt wird. Die Wirbelkörper und die Feststoffe, die sich abgesetzt haben, werden in ein nicht dargestelltes Zwischengefäß gefördert, in dem die leichten Feststoffpartikel abgetrennt und einer Wiederaufbereitung zugeführt werden. Zum Zurückgewinnen der Schwermetalle von den Wirbelkörpern wird in ebenfalls nicht dargestellter Weise ein Teil der Wirbelkörper abgetrennt und entsprechend aufbereitet. Der verbleibende Teil wird, zusammen mit einer Ersatzmenge frischer Wirbelkörper, über die Rohrleitung 38 in den Kreislauf zurückgeführt. Der Wasserstoff wird über die Rohrleitung 40 einer nutzbringenden Verwendung zugeführt. Das Einstellen der elektrischen Spannung an der Kathode 5 und das Einstellen der Strömung des Katholyten durch den Kathodenraum 4 wird durch Messen des Redoxpotentials und des pH⁺-Wertes der Flüssigkeit vor dem Kathodenraum 4 und nach dem Kathodenraum 4 und durch das regeltechnische Verarbeiten dieser Meßwerte in gleicher Weise wie dies im Vorstehenden bereits dargelegt worden ist, vorgenommen. Die Meßstellen für das Redoxpotential 43 und den pH⁺-Wert 44 vor dem Kathodenraum 4 befinden sich zwischen der Pumpe 36 und der Strahlpumpe 37. Die entsprechenden Meßstellen (Meßstelle 45 für das Redoxpotential, Meßstelle 46 für den pH⁺-Wert) für die kathodisch behandelte Flüssigkeit liegen vor dem Anodenraum 2 zwischen der Pumpe 24 und der Strahlpumpe 25. Als weitere Meßgröße wird an der hinter der Pumpe 36 befindlichen Meßstelle 48 der Volumenstrom der vom Wäscher 17 kommenden Flüssigkeit gemessen und regeltechnisch verarbeitet. Das Einstellen der erforderlichen Flüssigkeitsströmung wird durch Einregeln der Leistung der Pumpe 36 vorgenommen. Für Probenahmezwecke zum Ermitteln der Konzentration an Halogenid- und Schwermetallionen ist vor der Pumpe 36 eine Vorrichtung zum Entnehmen von Flüssigkeitsproben 23 vorgesehen.
Die von Schwermetallen weitgehend befreite kathodisch konditionierte Flüssigkeit gelangt nach Passieren des Abscheide- und Sammelbehälters 39 über die Rohrleitung 54, in der sich gegebenenfalls ein nicht dargestelltes Zwischen- oder Puffergefäß befindet, zur regelbaren Pumpe 24, mittels der die Flüssigkeitsströmung für den Anodenraum 2 geregelt wird. Durch die Pumpe 24 wird die Flüssigkeit durch die Strahlpumpe 25 gedrückt. In dieser Strahlpumpe 25 werden in die Flüssigkeit aus dem Abscheide- und Sammelbehälter 36 zusammen mit einer geringen Menge anodisch behandelter Flüssigkeit über die Rohrleitung 33 elektrisch aufladbare Wirbelkörper in dem Maße eingebracht wie es die elektrochemischen Reaktionen im Anodenraum 2 erfordern. Von der Strahlpumpe 25 aus gelangt die wirbelkörperhaltige Flüssigkeit über die Zulaufvorrichtung 7 in den Anodenraum 2. Dort laufen die gleichen Prozesse ab wie sie bereits in der Beschreibung der im Anodenraum stattfindenden Prozesse für die anhand von Fig. 3 beschriebenen Elektrolyseanlage erläutert worden sind. Es wird insofern auf diese Darstellung verwiesen.
Im Anodenraum wird das Redoxpotential des Anolyten erhöht und sein pH⁺-Wert erniedrigt. Außerdem werden den elektrochemischen Bedingungen entsprechend Halogene freigesetzt, organische Verbindungen oxidativ abgebaut und Schwermetalle und/oder Schwermetallverbindungen oxidiert. Im vorliegenden Fall sind Kathoden- 4 und Anodenraum 2 durch ein Diaphragma getrennt, das sowohl für Ionen als auch für die elektrolysierten Flüssigkeiten durchlässig ist. Damit sicher verhindert wird, daß im Anodenraum 2 elektrochemisch freigesetztes und im Anolyten gelöstes Chlor mit dem Anolyten durch das Diaphragma 6 hindurch in den Kathodenraum 4 übertritt, dort im Gasraum oberhalb des Katholyten zum Teil freigesetzt wird und mit dem kathodisch entwickelten Wasserstoff ein explosives Gemisch bildet, steht der Katholyt unter einem höheren Druck als der Anolyt. Die durch das Diaphragma 6 in den Anodenraum 2 übertretenden Flüssigkeitsmengen sind jedoch im Vergleich zu den Gesamtmengen der Flüssigkeiten, die die Elektrolyseräume 2, 4 durchströmen, gering.
Der Anolyt verläßt den Anodenraum 2 mit den in ihm enthaltenen Wirbelkörpern über die Abführvorrichtung 8 und gelangt in den Abscheide- und Sammelbehälter 26 für die Wirbelkörper. In diesem Behälter 26 können auch anolytisch freigesetzte Halogene, die den Erfordernissen entsprechend aus der Waschflüssigkeit freigesetzt werden, über die Leitung 28 ab- und einer nutzbringenden Verwendung zugeführt werden. Die von den Wirbelkörpern befreite und durch Einstellen des Gehalts an freien Halogenen endgültig bezüglich ihres Redoxpotentials konditionierte Flüssigkeit gelangt dann über die Rohrleitung 29 in den "sauren" Wäscher 17 zurück.
Das Einregeln des Redoxpotentials und des pH⁺-Wertes im Anodenraum 2 geschieht prinzipiell in gleicher Weise wie dies bereits aus der Beschreibung der Elektrolyseanlage nach Fig. 3 zu entnehmen ist. Es wird deshalb dorthin verwiesen. Im Unterschied zu den zuvor beschriebenen Ausführungsformen der Elektrolyseanlage werden dem Anodenraum hier neutrale bis alkalische Flüssigkeiten zugeführt und es befinden sich vor dem Anodenraum 2 und nach der regelbaren Pumpe 24 die Meßstellen 45 und 46 für das Messen des Redoxpotentials und des pH⁺-Wertes einer neutralen bis alkalischen Flüssigkeit. Das meß- und regeltechnische Verarbeiten der gemessenen Daten geschieht jedoch auch hier wie dies bereits beschrieben worden ist.

### Beispiele

Im folgenden werden Versuche beschrieben, die als Ausführungsbeispiele mit Versuchselektrolyseanlagen gemäß den Figuren 3 bis 5 durchgeführt worden sind.

### Beispiel 1

Die Versuche zu diesem Beispiel wurden mit einer Elektrolyseanlage gemäß Fig. 3 durchgeführt. Der Anodenraum 2 einer erfindungsgemäßen Wirbelschichtelektrolysezelle 1 nach Fig. 1 wurde von einer Waschflüssigkeit aus einem "sauren" Rauchgaswäscher 17 und der Kathodenraum 4 dieser Zelle 1 von einer Waschflüssigkeit aus einem "neutralen bis alkalischen" Rauchgaswäscher 18 durchströmt. Beide Waschflüssigkeiten wurden in der Elektrolysezelle 1 wieder auf Redoxpotentiale und pH⁺-Werte gebracht, die für ihre Wiederverwendung in den Rauchgaswaschprozessen erforderlich waren.

Tabelle 1 zeigt anhand von Meßwerten ein typisches Beispiel für die mit dieser Elektrolyseanlage durchgeführten Versuche.

**Tabelle 1**

| | Wert | Einheit |
|---|---|---|
| Zellenstrom | 800 | A |
| | | |

| **anodischer Kreislauf** | | |
|---|---|---|
| Volumenstrom der Waschflüssigkeit an Meßstelle 31 | 1000 | l/h |
| | | |
| Redoxpotential der Waschflüssigkeit gegen Ag/AgCl an Meßstelle 30 (vor Anodenraum) | 400 | mV |
| Redoxpotential der Waschflüssigkeit gegen Ag/AgCl an Meßstelle 33 (nach Anodenraum) | 900 | mV |
| | | |
| Konzentration an Iodid (Spuren) und Bromid in der Waschflüssigkeit; Probenahmestelle 23 (vor Anodenraum) | 2,4* | g/l |
| Konzentration an Iodid (Spuren) und Bromid in der Waschflüssigkeit; Probenahmestelle 34 (nach Anodenraum) | 0 bis 0,1* | g/l |
| Massenstrom an abgeschiedenem Jod/Brom (berechnet) | 2,3* | kg/h |
| | | |

| **kathodischer Kreislauf** | | |
|---|---|---|
| Volumenstrom der Waschflüssigkeit an Meßstelle 48 | 1000 | l/h |
| | | |
| Redoxpotential der Waschflüssigkeit gegen Ag/AgCl an Meßstelle 43 (vor Kathodenraum) | 400 | mV |
| Redoxpotential der Waschflüssigkeit gegen Ag/AgCl an Meßstelle 45 (nach Kathodenraum) | 200 | mV |
| | | |
| pH⁺-Wert der Waschflüssigkeit an Meßstelle 44 (vor Kathodenraum) | 5 | |
| pH⁺-Wert der Waschflüssigkeit an Meßstelle 46 (nach Kathodenraum) | 10 | |
| | | |
| Volumenstrom an abgeschiedenem Wasserstoff | 200 | l/h |

| | | |
|---|---|---|
| * Bestimmung nach Probenahme im Labor (keine kontinuierliche Messung) | | |

Das Redoxpotential der Waschflüssigkeit aus dem "sauren" Wäscher 17 wurde durch die Behandlung im Anodenraum 2 der Wirbelschichtelektrolysezelle 1 von 400 mV (Meßstelle 30) auf 900 mV (Meßstelle 33) erhöht, was einer beträchtlichen Erhöhung des Oxidationspotentials entspricht. Das Redoxpotential der Waschflüssigkeit aus dem "neutralen bis alkalischen" Wäscher 18 wurde durch die gekoppelte Behandlung im Kathodenraum 4 der Elektrolysezelle 1 von 400 mV Meßstelle 43 auf 200 mV 45 erniedrigt, was einer Erhöhung des Reduktionspotentials entspricht.
Der in Tabelle 1 nicht angegebene pH⁺-Wert der im Anodenkreislauf geführten Waschflüssigkeit lag stets im stark sauren Bereich bei pH⁺ 0 bis 1. Der pH⁺-Wert der Waschflüssigkeit im Kathodenkreislauf wurde dagegen von 5 (Meßstelle 44) auf 10 (Meßstelle 46) erhöht. Er wurde damit vom schwach sauren in den alkalischen Bereich verschoben. Aus dem Anodenkreislauf wurden neben der Einstellung der Waschflüssigkeit auf ein bestimmtes Oxidationspotential 2,3 kg Brom, die geringe Mengen Jods enthielten, abgeschieden und als Wertstoff gewonnen. Korrespondierend wurden im Kathodenkreislauf neben der Einstellung eines bestimmten Reduktionspotentials 200 l/h Wasserstoff gewonnen.

### Beispiel 2

Die zu diesem Beispiel durchgeführten Versuche wurden mit einer Versuchselektrolyseanlage gemäß Fig. 4 durchgeführt. Der anodische Kreislauf der Waschflüssigkeit entspricht vollkommen demjenigen in Fig. 3 und im Beispiel 1. Auch die Ergebnisse in diesem Kreislauf sind mit denen in Beispiel 1 identisch. Es wird darauf verwiesen. Anders ist die kathodische Führung der Waschflüssigkeit. Hier wird ein Teilstrom der den "sauren" Rauchgaswäscher 17 verlassenden Waschflüssigkeit, die einen Anteil an Schwermetallionen enthält, dem Kathodenraum 4 der Wirbelschichtelektrolysezelle 1 zugeführt, dort mit einem bestimmten Reduktionspotential und einem hohen pH-Wert versehen und von einem erheblichen Teil der Schwermetallfracht befreit, und dann, mit dem erforderlichen pH⁺-Wert und Redoxpotential versehen, in den "neutralen bis alkalischen" Rauchgaswäscher 18 geleitet. Von dort aus wird die verbrauchte Waschflüssigkeit dem "sauren" Rauchgaswäscher 17 wieder zugleitet.

Tabelle 2 zeigt anhand von Meßwerten ein typisches Beispiel für die mit dieser Elektrolyseanlage durchgeführten Versuche.

**Tabelle 2**

| | Wert | Einheit |
|---|---|---|
| Zellenstrom | 800 | A |
| | | |

| **anodischer Kreislauf** | | |
|---|---|---|
| Volumenstrom der Waschflüssigkeit an Meßstelle 31 | 1000 | l/h |
| | | |
| Redoxpotential der Waschflüssigkeit gegen Ag/AgCl an Meßstelle 30 (vor Anodenraum) | 400 | mV |
| Redoxpotential der Waschflüssigkeit gegen Ag/AgCl an Meßstelle 33 (nach Anodenraum) | 900 | mV |
| | | |
| Konzentration an Iodid (Spuren) und Bromid in der Waschflüssigkeit; Probenahmestelle 23 (vor Anodenraum) | 2,4* | g/l |
| Konzentration an Iodid (Spuren) und Bromid in der Waschflüssigkeit; Probenahmestelle 34 (nach Anodenraum) | 0 bis 0,1 * | g/l |
| | | |
| Massenstrom an abgeschiedenem Jod/Brom (berechnet) | 2,3* | kg/h |
| | | |

| **kathodischer Kreislauf** | | |
|---|---|---|
| Volumenstrom der Waschflüssigkeit an Meßstelle 48 | 100 | l/h |
| | | |
| Redoxpotential der Waschflüssigkeit gegen Ag/AgCl an Meßstelle 43 (vor Kathodenraum) | 400 | mV |
| Redoxpotential d. Waschflüssigkeit gegen Ag/AgCl an Meßstelle 45 (nach Kathodenraum) | - 300 | mV |
| | | |
| pH⁺-Wert der Waschflüssigkeit an Meßstelle 44 (vor Kathodenraum) | 1 | |
| pH⁺-Wert der Waschflüssigkeit an Meßstelle 46 (nach Kathodenraum) | 11 | |
| | | |
| Schwermetallgehalt, Waschflüssigkeit (Summe) Probenahmestelle 50 (vor Kathodenraum) | 10* | mg/l |
| Schwermetallgehalt, Waschflüssigkeit (Summe) Probenahmestelle 51 (nach Kathodenraum) | 5* | mg/l |
| | | |
| Masse an abgeschiedenen Schwermetallen (Summe), aus Massenbilanz | 0,5 | g/h |
| | | |
| Volumenstrom an abgeschiedenem Wasserstoff (Meßstelle 41) | 250 | l/h |

| | | |
|---|---|---|
| * Bestimmung nach Probenahme im Labor (keine kontinuierliche Messung) | | |

Dem Kathodenkreislauf wurde eine saure Waschflüssigkeit mit einem Oxidationspotential von 400 mV und einem pH⁺-Wert von nur 1 zugeleitet. Sie führte eine Schwermetallfracht von 10 mg/l, die im wesentlichen aus Kupfer bestand, mit sich. Im Kathodenraum 4 der Elektrolysezelle 1 war der Volumenstrom der Waschflüssigkeit niedrig eingestellt worden, was bei dem vorhandenen Zellenstrom zu vergleichsweise großen elektrochemischen Effekten führte. Das Redoxpotential der Waschflüssigkeit wurde ausgehend von +400 mV auf ein Redoxpotential von -300 mv gesenkt, während gleichzeitig der pH⁺-Wert vom stark sauren Bereich (pH⁺ = 1) auf einen Wert von pH⁺ = 11 im alkalischen Bereich verschoben wurde. Parallel dazu wurde die Schwermetallfracht der Waschflüssigkeit auf die Hälfte gesenkt und es wurden 250 l/h Wasserstoff erzeugt. Nachdem die kathodisch konditionierte Waschflüssigkeit im "neutralen bis alkalischen" Wäscher 18 reagiert hatte, wurde sie dem "sauren Wäscher" wieder zugeführt. Dagegen war der Volumenstrom der Waschflüssigkeit im Anodenraum 2 im Vergleich zu demjenigen im Kathodenraum 4 um ein Vielfaches höher. Entsprechend war die Änderung des Redoxpotentials geringer. Während der Versuche wurde keinerlei Abnahme der elektrolytischen Aktivität im Kathodenraum durch mitgeführte Schlämme oder ausgefällte Schwermetallverbindungen beobachtet.

Ein Vergleich der Beispiele 1 und 2 zeigt, daß durch Einstellen bestimmter Strömungsgeschwindigkeiten von Elektrolytflüssigkeiten im Anoden- und im Kathodenraum von Wirbelschichtelektrolysezellen des hier beschriebenen Typs bei Beibehaltung eines konstanten Zellenstromes unterschiedliche Redoxpotentiale und pH⁺-Werte eingestellt werden können. Außerdem können elektrochemisch aus unerwünschten Begleitstoffen der behandelten Flüssigkeiten Wertstoffe wie Halogene, Metalle und Wasserstoff gewonnen werden.

### Beispiel 3

Die zu diesem Beispiel durchgeführten Versuche wurden mit einer Versuchselektrolyseanlage gemäß Fig. 5 durchgeführt. Die Waschflüssigkeit stammt hier ausschließlich aus dem "sauren" Rauchgaswäscher 17. Sie wird nach der elektrochemischen Konditionierung wieder in diesen Wäscher zurückgeführt. Die Konditionierung einer Waschflüssigkeit für einen "neutralen bis alkalischen" Wäscher war hier nicht vorgesehen. Die Waschflüssigkeit wird zuerst durch den Kathodenraum 4 einer erfindungsgemäßen Wirbelschichtelektrolysezelle 1 und dann durch den Anodenraum 2 dieser Zelle 1 geleitet und von dort elektrochemisch konditioniert wieder dem Kopf des "sauren" Wäschers 17 zugeführt. Beim Durchtritt durch den Kathodenraum 4 werden der Flüssigkeit Schwermetalle entzogen und im Anodenraum wird sie mit dem für den nachgeschalteten Verfahrensschritt erforderlichen Redoxpotential versehen. Dieses ist in diesem Beispiel besonders hoch, da hier im Gegensatz zu den vorbeschriebenen Beispielen auch elektrolytisch Chlor freigesetzt worden und dieses nicht über die Leitung 28 abgeführt worden ist. Das hat zur Folge, daß über der Waschflüssigkeit im Sammel- und Abscheidebehälter 36 stets eine Halogengas, insbesondere Chlorgas enthaltende Atmosphäre vorliegt und somit dort und auch bis zum Eintritt in den Wäscher 17 die Waschflüssigkeit Chlor und außerdem Brom, Jod sowie Bromat und Jodat enthält, die ebenfalls als Oxidationsmittel im Wäscher wirken.

Tabelle 3 zeigt anhand von Meßwerten ein typisches Beispiel für die mit dieser Elektrolyseanlage durchgeführten Versuche. Auf die Angabe der Werte für die Schwermetallfracht der Waschflüssigkeit und der Werte für die abgeschiedenen Schwermetalle wurde hier verzichtet.

**Tabelle 3**

| | Wert | Einheit |
|---|---|---|
| Zellenstrom | 800 | A |
| | | |

| **kathodischer Teil** | | |
|---|---|---|
| Volumenstrom der Waschflüssigkeit an Meßstelle 48 (vor Kathodenraum) | 500 | l/h |
| Volumenstrom der Waschflüssigkeit an Meßstelle 31 (vor Anodenraum) | 400 | l/h |
| vom Kathoden- in den Anodenraum durch das Diaphragma (6) übergetretene Menge Waschflüssigkeit | 100 | l/h |
| | | |
| Redoxpotential der Waschflüssigkeit gegen Ag/AgCl an Meßstelle 43 (vor Kathodenraum) | 400 | mV |
| Redoxpotential der Waschflüssigk. gegen Ag/AgCl an Meßstelle 45 (nach Kathodenraum, vor Anodenraum) | 200 | mV |
| | | |
| pH⁺-Wert der Waschflüssigkeit an Meßstelle 44 (vor Kathodenraum) | 1 | |
| | | |
| Volumenstrom abgeschiedenen Wasserstoffs an Meßstelle 41 | 300 | l/h |
| | | |

| **anodischer Teil** | | |
|---|---|---|
| vom Kathoden- in den Anodenraum durch das Diaphragma (6) übergetretene Menge Waschflüssigkeit | 100 | l/h |
| Volumenstrom der Waschflüssigkeit an der Meßstelle 31 (vor Anodenraum) | 400 | l/h |
| Volumenstrom der Waschflüssigkeit an der Meßstelle 55 (nach Anodenraum) | 500 | l/h |
| | | |
| Redoxpotential der Waschflüssigkeit gegen Ag/AgCl an Meßstelle 45 (vor Anodenraum) | 200 | mV |
| Redoxpotential der Waschflüssigkeit gegen Ag/AgCl an Meßstelle 33 (nach Anodenraum) | 1000 | mV |
| | | |
| Konzentration an Jodid (Spuren) + Bromid in der Waschflüssigkeit an Probenahmestelle 56 (nach Kathodenraum) | 2,4* | g/l |
| Konzentration an Jodid (Spuren) + Bromid in der Waschflüssigkeit an Probenahmestelle 34 (nach Kathodenraum) | - | g/l |
| | | |
| Massenstrom an freiem Jod + Brom, berechnet als Brom an Probenahmestelle 34 | 1,2* | kg/h |
| Massenstrom an freiem Chlor an Probenahmestelle 34 (nach Anodenraum) | 0,5* | kg/h |

| | | |
|---|---|---|
| * Bestimmung nach Probenahme im Labor (keine kontinuierliche Messung) | | |

Bei diesen Versuchen wurde als Trennung zwischen dem Anoden- 2 und dem Kathodenraum 4 ein Diaphragma 6 verwendet, das sowohl für Ionen als auch für die Waschflüssigkeit durchlässig war. Um den unerwünschten und gefährlichen Durchtritt von anodisch freigesetztem und in der Waschflüssigkeit gelöstem Chlor in den Kathodenraum 4 zu verhindern, stand die Flüssigkeit im Kathodenraum 4 unter einem etwas höheren Druck als diejenige im Anodenraum. Dadurch wurde eine geringe Strömung des Katholyten durch das Diaphragma 6 hindurch in den Anodenraum 2 der Elektrolysezelle 1 bewirkt und damit die Gefahr einer Chlorknallgasexplosion im Kathodenraum 4 gebannt.
Wie Tabelle 3 zu entnehmen ist, wird das Redoxpotential der Waschflüssigkeit zum Zwecke der Abscheidung von mitgeführten Schwermetallen im Kathodenraum 4 von 400 auf 200 mV gesenkt, dann aber beim Durchtritt durch den Anodenraum 2 von 200 auf das hohe Oxidationspotential von 1000 mv erhöht. Dieses Beispiel zeigt, daß das erfindungsgemäße Verfahren mit der erfindungsgemäßen Elektrolyseanlage auch dafür geeignet ist, auch solche Flüssigkeiten mit einem gewünschten Redoxpotential zu versehen, die lediglich für einen nachgeschalteten Verfahrensschritt, hier für das Verwenden in dem "sauren" Rauchgaswäscher, vorgesehen sind.

### Beispiel 4

In diesem Beispiel wurde die Verminderung des Gehalts an polychlorierten Dibenzodioxinen und polychlorierten Furanen in Rauchgasen einer Sondermüllverbrennungsanlage erprobt. Es wurde eine Elektrolyseanlage gemäß Figur 3 verwendet.

Bezüglich der Beschreibung dieser Anlage wird auf die Ausführungen zu dieser Figur verwiesen. Im Anodenkreislauf betrug der Volumenstrom der aus dem "sauren" Rauchgaswäscher 17 stammenden Waschflüssigkeit 480 l/h, im Kathodenkreislauf betrug er 130 l/h. Tabelle 4 gibt die Meßwerte zu diesem Versuch wieder:

**Tabelle 4**

| | Wert | Einheit |
|---|---|---|
| Zellenstrom | 250 | A |
| | | |

| **anodischer Kreislauf** | | |
|---|---|---|
| Volumenstrom der Waschflüssigkeit an Meßstelle 31 (vor Anodenraum 2) | 480 | l/h |
| | | |
| Redoxpotential, Waschflüssigkeit, gegen Ag/AgCl; Meßstelle 30 (vor Anodenraum 2) | 400 | mV |
| Redoxpotential, Waschflüssigkeit gegen Ag/AgCl; Meßstelle 33 (nach Anodenraum 2) | 1100 | mV |
| | | |
| Konzentration an toxischen Dioxinen/Furanen; Probenahmestelle 23 (vor Anodenraum) | 0,5* | TE** |
| Konzentration an toxischen Dioxinen/Furanen; Probenahmestelle 34 (nach Anodenraum) | 0,07* | TE** |
| | | |

| **kathodischer Kreislauf** | | |
|---|---|---|
| Volumenstrom der Waschflüssigkeit an Meßstelle 48 (vor Kathodenraum 4) | 130 | l/h |
| | | |
| Redoxpotential, Waschflüssigkeit, gegen Ag/AgCl; Meßstelle 43 (vor Kathodenraum 4) | 200 | mV |
| Redoxpotential, Waschflüssigkeit, gegen Ag/AgCl; Meßstelle 45 (nach Kathodenraum 4) | -500 | mV |
| | | |
| pH⁺-Wert, Waschflüssigkeit; Meßstelle 44 (vor Kathodenraum 4) | 8 | |
| pH⁺-Wert, Waschflüssigkeit; Meßstelle 46 (nach Kathodenraum 4) | 11 | |
| | | |
| Konzentration an toxischen Dioxine/Furanen im kathodischen Kreislauf | *** | |

| | | |
|---|---|---|
| * Bestimmung nach Probenahme im Labor (keine kontinuierliche Messung) | | |
| ** TE = Toxizitätsäquivalent von Dibenzodioxinen bzw. Dibenzofuranen (für Absolutwerte in ng/kg Waschflüssigkeit, siehe Diagramm 1) | | |
| *** wegen der sehr geringen Konzentration an toxischen Dioxinen/Furanen in anodischen Kreislauf wurde im kathodischen Kreislauf keine Bestimmung der toxischen Dioxine/Furane durchgeführt. Siehe jedoch Beispiel 5. | | |

Die Meßwerte zeigen, daß der Gehalt an toxischen Dioxinen und Furanen in der Waschflüssigkeit beim Durchführen des erfindungsgemäßen Verfahrens bei Anwendung eines entsprechend hohen Oxidationspotentials drastisch gesenkt werden kann. Tabelle 5 gibt wieder, welche Dioxine und welche Furane in die Untersuchung einbezogen und welche Konzentrationsänderungen in ng/kg Waschflüssigkeit für jede dieser Verbindungen durch die vorbeschriebene Behandlung erreicht worden sind.

**Tabelle 5**

| Konzentration an toxischen Dioxinen und Furanen (ng/kg) | | | |
|---|---|---|---|
| Bezeichnung | Abkürzung | vor Anodenraum (Probenahmestelle 23) | nach Anodenraum (Probenahmestelle 34) |
| Tetrachlorodibenzodioxine* | TCDD | 0,677 | <0,003 |
| Pentachlorodibenzodioxine* | PCDD | 2,369 | 0,073 |
| Hexachlorodibenzodioxine* | H6CDD | 3,256 | 0,100 |
| Heptachlorodibenzodioxine* | H7CDD | 1,956 | 0,088 |
| Tetrachlorodibenzofurane* | TCDF | 0,863 | 0,139 |
| Pentachlorodibenzofurane* | PCDF | 1,904 | 0,301 |
| Hexachlorodibenzofurane* | H6CDF | 1,455 | 0,172 |
| Heptachlorodibenzofurane* | H7CDF | 0,946 | 0,102 |

| | | | |
|---|---|---|---|
| * Es ist immer die Summe der Isomeren angegeben | | | |

### Beispiel 5

Mit diesem Versuch, der unter Verwendung einer Elektrolyseanlage gemäß Fig. 3 mit einer nicht kontinuierlichen, absatzweisen Fahrweise durchgeführt worden ist, wird gezeigt, daß sowohl durch anodisches als auch besonders durch kathodisches Behandeln von Waschflüssigkeiten Dibenzodioxine und toxische Furane in hohem Maße zerstört werden können. Zur Versuchsdurchführung wurden zwei Vorratstanks mit saurer, mit toxischen Dioxinen und Furanen belasteter Waschflüssigkeit aus dem "sauren" Rauchgaswäscher einer Sondermüllverbrennungsanlage gefüllt. Diese Waschflüssigkeit enthielt außerdem noch Schwermetallionen. Einer dieser Tanks diente als Reservoir für den anodischen Kreislauf, der andere als Reservoir für den kathodischen Kreislauf. Während der Versuchsdurchführung, die insgesamt 3 Stunden dauerte, wurde den Tanks keine neue Flüssigkeit zugeführt. Anolyt und Katholyt wurden während der gesamten Versuchsdauer in ihren jeweiligen Kreisläufen getrennt umgepumpt. Diese Verfahrensweise bedingt, daß sich die Redoxpotentiale, der pH⁺-Wert im kathodischen Kreislauf und die Konzentrationen von in der Waschflüssigkeit enthaltenen Substanzen im Laufe der Versuchsdurchführung ständig ändern.

In der folgenden Tabelle 6 sind die den Versuch betreffenden Meßwerte wiedergegeben:

**Tabelle 6**

| | Wert | Einheit |
|---|---|---|
| | | |
| Versuchsdauer | 3 | h |
| | | |
| Zellenstrom | 315 | A |
| | | |

| anodischer Kreislauf | | |
|---|---|---|
| Volumenstrom der Waschflüssigkeit an Meßstelle 31 (vor Anodenraum 2) | 900 | l/h |
| | | |
| Redoxpotential, Waschflüssigkeit gegen Ag/AgCl, Meßstelle 30 (vor Anodenraum 2) zu Beginn des Versuches | 500 | mV |
| Redoxpotential, Waschflüssigkeit gegen Ag/AgCl, Meßstelle 33 (nach Anodenraum 2) 10 Minuten nach Beginn des Versuches | 900 | mV |
| Redoxpotential, Waschflüssigkeit gegen Ag/AgCl, Meßstelle 33 (nach Anodenraum 2) zum Ende des Versuches | 1150 | mV |
| | | |
| Konzentration an toxischen Dioxinen/Furanen an Probenahmestelle 23 (vor Anodenraum) zu Beginn des Versuches | 3,4* | TE** |
| Konzentration an toxischen Dioxinen/Furanen an Probenahmestelle 34 (nach Anodenraum) zum Ende des Versuches | 0,5* | TE** |
| | | |

| kathodischer Kreislauf | | |
|---|---|---|
| Volumenstrom der Waschflüssigkeit an Meßstelle 48 (vor Anodenraum 2) | 1250 | l/h |
| | | |
| Redoxpotential, Waschflüssigkeit gegen Ag/AgCl, Meßstelle 43 (vor Anodenraum 2) zu Beginn des Versuches | + 500 | mV |
| Redoxpotential, Waschflüssigkeit gegen Ag/AgCl, Meßstelle 33 (nach Anodenraum 2) 30 Minuten nach Beginn des Versuches | + 300 | mV |
| Redoxpotential, Waschflüssigkeit gegen Ag/AgCl, Meßstelle 33 (nach Anodenraum 2) zum Ende des Versuches | - 900 | mV |
| | | |
| pH⁺-Wert, Waschflüssigkeit; Meßstelle 44 (vor Kathodenraum (4) zu Beginn des Versuches | 1 | |
| pH⁺-Wert, Waschflüssigkeit; Meßstelle 46 (nach Kathodenraum (4) zum Ende des Versuches | 12 | |
| | | |
| Konzentration an toxischen Dioxinen/Furanen an Probenahmestelle 47 (vor Kathodenraum) zu Beginn des Versuches | 3,4 * | TE** |
| Konzentration an toxischen Dioxinen/Furanen an Probenahmestelle 51 (nach Kathodenraum) zum Ende des Versuches | 0,2* | TE** |

| | | |
|---|---|---|
| * Bestimmung nach Probenahme im Labor (keine kontinuierliche Messung) | | |
| ** TE = Toxizitätsäquivalent von Dibenzodioxinen bzw. Dibenzofuranen (für Absolutwerte in ng/kg Waschflüssigkeit siehe Diagramm 2) | | |

Während des Versuchsverlaufs wurden entsprechend dem Anwachsen des Redoxpotentials im Anodenraum zuerst Jod und Brom und dann Chlor freigesetzt, die nicht aus dem Kreislauf entfernt wurden. Im Kathodenraum wurde Wasserstoff freigesetzt, der gasförmig aus dem Kreislauf entfernt wurde und es wurden Schwermetalle abgeschieden. Auf die Ergebnisse der Schwermetallabscheidung wird unter Beispiel 6 eingegangen. Der pH⁺-Wert der Waschflüssigkeit im anodischen Kreislauf lag stets im stark sauren Bereich bei 1 bis 0. Im kathodischen Kreislauf lag der pH⁺-Wert naturgemäß zunächst im stark sauren Bereich, näherte sich im Verlauf von ca. 80 Minuten dem Neutralbereich und bewegte sich nach Überschreiten des Neutralpunktes sehr schnell in den stark alkalischen Bereich hinein. Entsprechend langsam war anfangs der Abfall des Redoxpotentials im kathodischen Kreislauf wie der Zwischenmeßwert von + 300 mV nach 30 Minuten zeigt. Dieser Verlauf hatte jedoch keinen Einfluß auf die Wirksamkeit des kathodischen also reduktiven Abbaus der Dibenzodioxine und der Dibenzofurane. Ihr Gehalt sank während des Versuchsverlaufs von 3,4 TE auf 0,2 TE. Im anodischen Kreislauf sank der Gehalt dieser Substanzen von 3,4 TE auf 0,5 TE.

Aus Tabelle 7 sind die aus diesem Versuch erfaßten Dibenzodioxine und Dibenzofurane und deren Konzentrationsabnahmen in ng/kg Waschflüssigkeit zu entnehmen.

**Tabelle 7**

| Konzentration an toxischen Dioxinen und Furanen (ng/kg) | | | | | |
|---|---|---|---|---|---|
| Bezeichnung | Abkürzung | vor Anodenr. (Probenahmestelle 23) | nach Anodenr. (Probenahmestelle 34) | vor Kathodenr. (Probenahmestelle 47) | nach Kathodenr. (Probenahmestelle 51) |
| Tetrachlorodibenzodioxine* | TCDD | 0,268 | <0,003 | 0,268 | 0,023 |
| Pentachlorodibenzodioxine* | PCDD | 0,730 | 0,068 | 0,730 | 0,050 |
| Hexachlorodibenzodioxine* | H6CDD | 1,445 | 0,183 | 1,445 | 0,129 |
| Heptachlorodibenzodioxine* | H7CDD | 3,203 | 0,355 | 3,203 | 0,204 |
| Tetrachlorodibenzofurane* | TCDF | 2,030 | 0,367 | 2,030 | 0,226 |
| Pentachlorodibenzofurane* | PCDF | 11,312 | 1,163 | 11,312 | 0,763 |
| Hexachlorodibenzofurane* | H6CDF | 12,604 | 1,891 | 12,604 | 0,976 |
| Heptachlorodibenzofurane* | H7CDF | 18,661 | 2,267 | 18,661 | 1,100 |

| | | | | | |
|---|---|---|---|---|---|
| * Es ist immer die Summe der Isomeren angegeben | | | | | |

Dieser Versuch zeigt, daß die Dibenzodioxine und Dibenzofurane mit Hilfe des erfindungsgemäßen Verfahrens und der erfindungsgemäßen Elektrolyseanlage sowohl durch Einstellen eines hohen als auch durch Einstellen eines niedrigen Redoxpotentials zu unschädlichen Verbindungen und/oder Fragmenten abgebaut werden können.
Der Vergleich der Beispiele 4 und 5 läßt den Schluß zu, daß die genannten toxischen Verbindungen auch in einem kontinuierlichen Verfahren mit bestem Erfolg durch Behandeln mit Flüssigkeiten, die ein sehr niedriges Redoxpotential aufweisen, zu unschädlichen Verbindungen zersetzt werden können.

### Beispiel 6

Dieser Versuch zu Beispiel 6 diente der Abscheidung von Schwermetallen im Kathodenraum der Elektrolysezelle und wurde im Rahmen des Versuches gemäß Beispiel 5 und Fig. 3 durchgeführt. Die Versuchsbedingungen sind dieselben wie bei Beispiel 5 und sind aus Tabelle 6 zu entnehmen. Zu Beginn des Versuches wurden an der Probenahmestelle 47 (nach dem Wäscher 18 und vor dem Kathodenraum 4) Flüssigkeitsproben für das Bestimmen des Gehalts an Schwermetallen entnommen. Während und zum Ende des Versuches wurden Flüssigkeitsproben an Probenahmestelle 51 (nach dem Kathodenraum 4 und vor dem Wäscher 18) entnommen, um die verfahrensbedingte Abnahme des Gehalts an Schwermetallen feststellen zu können.

Die Ergebnisse der Messungen zu Beginn und zum Ende des Versuches sind aus Tabelle 8 zu entnehmen.

**Tabelle 8**

| Metall | Pb | Cr | Cu | Ni | Zn | Fe | Hg |
|---|---|---|---|---|---|---|---|
| Abscheidungsrate (%) | 69 | 75 | 99 | 79 | 84 | 97 | 78 |
| Konzentration zu Beginn des Versuches (mg/l) an Probenahmestelle 47 | 7 | 0,37 | 18 | 0,46 | 7 | 4 | 0,08 |
| Konzentration am Ende des Versuches (mg/l) an Probenahmestelle 51 | 2,1 | 01 | 0,1 | 0,1 | 2,8 | 0,1 | 0,02 |

Aus Tabelle 8 ist zu entnehmen, daß im Rahmen des erfindungsgemäßen Verfahrens Schwermetalle aus Flüssigkeiten mit hohen Abscheidungsraten entfernt werden können. Die Abscheidung der Metalle beruhte einerseits auf elektrolytischer Reduktion ihrer Ionen und andererseits auf Fällung aufgrund der pH⁺-Verschiebung im Katholyten. Die ausgefällten Metallverbindungen wurden aus dem Katholyten durch Filtration und Sedimentation abgetrennt. Überraschenderweise wurden auf den Wirbelkörpern nur geringe Mengen an abgeschiedenen Metallen gefunden. Dagegen wurden in dem abfiltrierten und sedimentierten Gut auch metallische Anteile festgestellt. Der Grund dafür wird darin gesehen, daß die zunächst an der Kathode und an den kathodisch geladenen Wirbelkörpern abgeschiedenen Schwermetalle durch die Reibung des Wirbelgutes an der Kathode und an sich selbst abgerieben werden und sich mit den ausgefällten Bestandteilen vermischen.

Die im Vorstehenden dargelegte Erfindung hat folgende Vorteile:
1. Verfahren:
   - Das erfindungsgemäße Verfahren gestattet es, auf einfache, elektrochemische Weise Flüssigkeiten gezielt und schnell mit solchen Redoxpotentialen zu versehen, daß mit ihnen in nachgeschalteten Verfahrensschritten chemische Reaktionen, speziell Reinigungsreaktionen durchgeführt werden können.
   - Bis jetzt wurden diese chemischen Reaktionen mit Hilfe von Zusätzen von Hilfschemikalien zu den zum Reinigen benutzten Flüssigkeiten durchgeführt. Dies führte zur Erhöhung der Salzfracht der anfallenden Abwässer. Der für dieses Verfahren nach dem Stand der Technik notwendige große Meß- und Dosieraufwand, die Kosten für die zuzusetzenden Chemikalien und die Kosten für das Beseitigen der mit großen Salzfrachten belasteten Abwässer können nunmehr eingespart werden.
   - Bei dem erfindungsgemäßen Verfahren können desweiteren in den Flüssigkeiten befindliche, als Umweltbelastung eingestufte Stoffe wie beispielsweise Halogenid-Ionen, Schwermetallverbindungen, Schwermetalle oder Schwermetallionen durch elektrochemische Behandlung in Wertstoffe umgewandelt oder/und als solche gewonnen werden (Chlor, Brom, Jod, Schwermetalle). Der stets bei dem Verfahren katholytisch entwickelte, umweltneutrale Wasserstoff wird ebenfalls nutzbringenden Verwendung zugeführt.
   - Mit dem Verfahren können hoch toxische organische Verbindungen wie Dibenzodioxine und Dibenzofurane und andere organische Verbindungen bereits im Anoden- oder im Kathodenraum der Elektrolysezelle oder in beiden oder in den nachgeschalteten Verfahrensschritten und in Flüssigkeiten in die sie bei den nachgeschalteten Verfahrensschritten gelangen, zerstört und unschädlich gemacht werden.
2. Elektrolysezelle
   - Die erfindungsgemäße Elektrolysezelle und das Verfahren mit dem sie betrieben wird, garantieren für alle Betriebszustände eine stets gleichmäßige Verteilung der in den Elektrolytflüssigkeiten befindlichen Wirbelkörper.
   - Sowohl Anoden- als auch Kathodenraum der Elektrolyse-Elektrolysezelle können ohne Schwierigkeiten mit unterschiedlichen und während des Verfahrensganges schwankenden Strömungsgeschwindigkeiten betrieben werden.
   - Durch die Zwangsführung der Wirbelkörper im Kreislauf entfallen Schwierigkeiten von Wirbelschichtelektrolysezellen nach dem Stand der Technik wie ungleichmäßige Verteilung von Wirbelkörpern oder unerwünschter Austrag von Wirbelkörpern mit der behandelten Flüssigkeit.
   - Infolge der speziellen Strömungsführung und der speziellen Strömungsgeschwindigkeiten der Elektrolyten und der ständigen, mit einer gewissen Reibung verbundenen Zusammenstöße der Wirbelkörper mit den Elektroden und mit sich selbst, werden die elektrochemisch aktiven Oberflächen stets frei und aktiv gehalten. Ein Ausbilden von deaktivierenden Deckschichten findet ebensowenig statt wie ein Leistungsabfall durch Ausbilden von Gaspolstern. Durch die außerdem in einer solchen Strömung vorhandenen Relativbewegungen zwischen Strömungsfäden und den Oberflächen der Wirbelkörper sowie den Elektrodenoberflächen liegen in dem System stets sehr dünne Grenzflächen vor. Durch diese Effekte arbeiten die Elektrolysezellen störungsfrei und es werden in und mit ihnen hohe Raum-Zeit-Ausbeuten erreicht. Elektrische Kurzschlüsse durch Bildung von Brücken aus Wirbelkörpern, die bei Elektrolysezellen des Standes der Technik häufig zu Störungen führen, treten hier nicht auf.
   - Durch die spezielle Strömungsführung und die Strömungsgeschwindigkeit sind auch hohe Anteile von in den zu behandelnden Flüssigkeiten vorhandenen Schwebstoffen und Schlämmen, die bei allen herkömmlichen Elektrolysezellen die elektrisch aktiven Oberflächen verschlämmen und verblocken, was mindestens zu einem beträchtlichen Leistungsabfall der Anlage führt, unschädlich (siehe hierzu den vorstehenden Absatz). Die Schwebstoffe und Schlämme werden durch die Strömung mit- und aus der Elektrolysezelle ausgetragen und können dann mit Hilfe der Abscheide- und Sammelvorrichtung der erfindungsgemäßen Elektrolyseanlage abgetrennt werden.
   - Ein Entmischen der Wirbelschicht durch elektrochemisch freigesetzte Gase ist nicht möglich, da die wirbelbettpartikel durch die Räume der Elektrolysezelle - in der Flüssigkeit gleichmäßig verteilt und zusammen mit dieser Flüssigkeit - mit vergleichsweise großer Geschwindigkeit zwangsgeführt werden. Es handelt sich in der erfindungsgemäßen Wirbelschichtelektrolysezelle nicht um ein Wirbelbett im herkömmlichen Sinne.
   - Durch die Zwangsführung der Wirbelkörper enthaltenden Flüssigkeit und deren große Strömungsgeschwindigkeit ist der Stofftransport gegenüber herkömmlichen Wirbelschichtelektrolysezellen verbessert.
3. Die spezielle Ausführung der erfindungsgemäßen Elektrolysezelle in segmentierter Form gestattet das Anlegen von über die Höhe der Elektrolysezelle unterschiedlichen elektrischen Spannungen und damit das Steuern der in der Zelle ablaufenden elektrochemischen Vorgänge über die Höhe der Zelle oder in verschiedenen Zonen der Zelle. Dieser Zellentyp gestattet auch eine bessere Ausnutzung der elektrischen Energie.

### Bezugszeichenliste

- 1: Wirbelschichtelektrolysezelle
- 2: Anodenraum von 1
- 3: Anode der Wirbelschichtelektrolysezelle
- 3'; 3''; 3''': Segmente der segmentierten Anode
- 4: Kathodenraum von 1
- 5: Kathode der Wirbelschichtelektrolysezelle
- 5';5'';5''': Segmente der segmentierten Kathode
- 6: Diaphragma zwischen Anode und Kathode in 1
- 7: Zulaufvorrichtung für den Anolyten
- 8: Ablaufvorrichtung für den Anolyten
- 9 ': Zulaufvorrichtung für den Katholyten
- 10: Ablaufvorrichtung für den Katholyten
- 11: Wirbelkörper im Anolyten
- 12: Wirbelkörper im Katholyten
- 13;13': Dichtungen zwischen den Anodensegmenten 3'..
- 14;14': Dichtungen zwischen den Kathodensegmenten 5'..
- 15;15';15'': Elektroanschlüsse für die Anodensegmente
- 16;16';16'': Elektroanschlüsse für die Kathodensegmente
- 17: Rauchgaswäscher, saurer Betrieb
- 18: Rauchgaswäscher, neutraler bis alkalischer Betrieb
- 19: Rauchgasleitung
- 20: Elektroanschluß für Anode 3
- 21: Elektroanschluß für Kathode 5
- 22: Rohrleitung zum Abführen der sauren Waschflüssigkeit aus Wäscher 17
- 23: Probenahmestelle nach Wäscher 17 zum Messen von Inhaltsstoffen der Waschflüssigkeit
- 24: regelbare Pumpe vor Anodenraum 2
- 25: Strahlpumpe vor Anodenraum 2 zum Vermischen des Anolyten mit Wirbelkörpern
- 26: Abscheide- und Sammelbehälter nach Anodenraum 2
- 27: Rohrleitung von Behälter 26 zu Strahlpumpe 25
- 28: Rohrleitung zum Abführen von Halogenen aus Behälter 26
- 29: Rohrleitung zwischen Behälter 26 und Wäscher 17
- 30: Meßstelle, Redoxpotential, nach Wäscher 17
- 31: Meßstelle, Volumenstrom für saures Waschwasser vor Anodenraum 2
- 32: Meß- bzw. Probenahmestelle in Rohrleitung 28 zum Messen der Mengen an anodisch abgeschiedenen gasförmigen Stoffen
- 33: Meßstelle, Redoxpotential, nach Anodenraum 2
- 34: Probenahmestelle nach Anodenraum 2, Feststellen von Inhaltsstoffen in der Waschflüssigkeit
- 35: Rohrleitung zum Abführen von Waschflüssigkeit aus Wäscher 18
- 36: regelbare Pumpe vor Kathodenraum 4
- 37: Strahlpumpe vor Kathodenraum 4
- 38: Rohrleitung von Behälter 39 zu Strahlpumpe 37
- 39: Abscheide- und Sammelgefäß nach Kathodenraum 4
- 40: Rohrleitung z. Abführen v. Gasen (Behälter 39)
- 41: Meßstelle in Rohrleitung 40 zum Messen der Menge abgeführten Wasserstoffs
- 42: Rohrleitung zum Rückführen der Waschflüssigkeit in Wäscher 18
- 43: Meßstelle, Redoxpotential, vor Kathodenraum 4
- 44: Meßstelle, pH⁺-Wert, vor Kathodenraum 4
- 45: Meßstelle, Redoxpotential, nach Kathodenraum 4
- 46: Meßstelle, pH⁺-Wert, nach Kathodenraum 4
- 47: Probenahmestelle zum Bestimmen von Inhaltsstoffen vor Kathodenraum 4
- 48: Meßstelle, Volumenstrom der Flüssigkeit vor Kathodenraum 4
- 49: Rohrleitung von Wäscher 17 zu Pumpe 36, Fig. 4
- 50: Probenahmestelle in Rohrleitung 49 zum Bestimmen des Gehalts an Inhaltsstoffen, Fig. 4
- 51: Probenahmestelle nach Behälter 39 zum Bestimmen des Gehalts an Inhaltsstoffen
- 52: Rohrleitung zum Rückführen der Waschflüssigkeit in Wäscher 17, Fig. 4
- 53: Leitung und Vorrichtung zum Abtrennen von Wirbelkörpern und Festsubstanzen nach Kathodenraum 4, Fig. 4; 5
- 54: Rohrleitung für Flüssigkeit von Kathodenraum 4 zum Anodenraum 2, Fig. 5
- 55: Meßstelle für Volumenstrom der Flüssigkeit vor Wäscher 17, Fig. 5
- 56: Probenahmestelle zum Bestimmen von Inhaltsstoffen nach Kathodenraum 4, Fig. 5

## Patentansprüche

1. Verfahren zum gezielten Einstellen des Redoxpotentials und/oder des pH⁺-Wertes von mindestens einer Flüssigkeit in mindestens einer Elektrolysezelle zum Reinigen einer solchen Flüssigkeit oder zum Bereitstellen einer solchen Flüssigkeit als reaktive Flüssigkeit für weitere Verfahrensschritte,
welches umfaßt,
Durchleiten eines Stromes der mindestens einen Flüssigkeit durch mindestens eine einen Kathoden- und einen Anodenraum aufweisende Wirbelschichtelektrolysezelle, in der sich mit elektrischen Ladungen beladbare Wirbelkörper befinden, wobei das Redoxpotential und/oder der pH⁺-Wert der mindestens einen Flüssigkeit bei ihrem Strömen durch die Wirbelschichtelektrolysezelle sowohl im Kathodenraum als auch im Anodenraum durch separates Einregeln des Volumenstromes des Katholyten im Kathodenraum und durch separates Einregeln des Volumenstromes des Anolyten im Anodenraum in Verbindung mit dem Einstellen des elektrischen Zellenstromes in der Elektrolysezelle auf bestimmte gewünschte Werte gebracht werden.

2. Verfahren nach Patentanspruch 1,
bei welchem nur eine Flüssigkeit behandelt wird und mindestens ein Teilstrom dieser Flüssigkeit zuerst durch den Kathodenraum und dann mindestens ein Teilstrom dieser Flüssigkeit nach dem Verlassen des Kathodenraumes durch den Anodenraum der Elektrolysezelle geleitet wird.

3. Verfahren nach Patentanspruch 1,
bei welchem nur eine Flüssigkeit behandelt wird, wobei zwei Teilströme dieser Flüssigkeit gebildet werden und einer dieser Teilströme den Anoden- und der andere dieser Teilströme den Kathodenraum durchströmt.

4. Verfahren nach Patentanspruch 1,
bei welchem Anolyt und Katholyt verschiedene Flüssigkeiten sind.

5. Verfahren nach Patentanspruch 4,
bei welchem der Anolyt und der Katholyt vor dem Einströmen in die Elektrolysezelle verschiedene pH⁺-Werte und/oder verschiedene Redoxpotentiale aufweisen.

6. Verfahren nach einem der Patentansprüche 1 bis 5,
bei welchem im Anodenraum der Elektrolysezelle das Redoxpotential der Flüssigkeit erhöht und der pH⁺-Wert erniedrigt wird und im Kathodenraum der Elektrolysezelle das Redoxpotential der Flüssigkeit erniedrigt und der pH⁺-Wert erhöht wird.

7. Verfahren nach einem der Patentansprüche 1 bis 6,
bei welchem die Flüssigkeiten mit Halogenen und/oder Halogeniden und/oder Halogenverbindungen und/oder Schwermetallionen und/oder Dioxinen und/oder Schwebstoffen verunreinigt sind.

8. Verfahren nach Patentanspruch 7,
bei welchem anodisch Chlor freigesetzt wird.

9. Verfahren nach Patentanspruch 7,
bei welchem anodisch Brom und Jod aber kein Chlor freigesetzt wird.

10. Verfahren nach Patentanspruch 7,
bei welchem anodisch Jod aber kein Brom oder/und Chlor freigesetzt wird/werden.

11. Verfahren nach einem der Patentansprüche 7 bis 10,
bei welchem anodisch und/oder kathodisch organische Verbindungen zu niedermolekularen oder/und elementaren Stoffen abgebaut werden.

12. Verfahren nach Patentanspruch 11,
bei welchem anodisch oder/und kathodisch toxische Dioxine und toxische Furane zu unschädlichen Verbindungen abgebaut werden.

13. Verfahren nach einem der Patentansprüche 7 bis 12,
bei welchem kathodisch Schwermetalle und Wasserstoff abgeschieden werden.

14. Verfahren nach einem der Patentansprüche 1 bis 13,
bei welchem die Flüssigkeiten Abwässer aus Galvanisieranlagen, Sickerwässer aus Mülldeponien, Waschwässer aus Gaswaschanlagen, insbesondere aus Rauchgaswäschern von Müllverbrennungsanlagen sind.

15. Verfahren nach Patentanspruch 14,
bei welchem die Flüssigkeiten Waschwässer aus Gaswaschanlagen sind und Anolyt und Katholyt aus demselben Wäscher stammen.

16. Verfahren nach Patentanspruch 15,
bei welchem das betreffende Waschwasser erst durch den Kathodenraum und dann durch den Anodenraum der Elektrolysezelle geleitet wird oder umgekehrt.

17. Verfahren nach Patentanspruch 14,
bei welchem die Flüssigkeiten Waschwässer aus Gaswaschanlagen sind und Anolyt und Katholyt aus verschiedenen Wäschern stammen.

18. Verfahren nach Patentanspruch 17,
bei welchem die Flüssigkeit aus dem einen Wäscher sauer und die Flüssigkeit aus dem anderen Wäscher neutral bis alkalisch reagiert.

19. Verfahren nach einem der Patentansprüche 15 bis 18, bei welchem die Waschwässer nach dem elektrolytischen
Behandeln als reaktive Flüssigkeiten in mindestens einen der Wäscher zurückgeleitet werden.

20. Verfahren nach einem der Patentansprüche 6 und 17 bis 19,
bei welchem die Flüssigkeiten, die den Anolyten bilden, aus einem Wäscher stammen, der mit saurer Waschflüssigkeit betrieben wird und nach ihrer elektrolytischen Behandlung in diesen zurückgeleitet werden und die Flüssigkeiten, die den Katholyten bilden, aus einem Wäscher stammen, der mit neutraler bis alkalischer Waschflüssigkeit betrieben wird und die nach ihrer elektrolytischen Behandlung in diesen zurückgeleitet werden.

21. Verfahren nach einem der Patentansprüche 1 bis 20,
bei welchem der Anolyt und der Katholyt in der Elektrolysezelle durch ein Diaphragma getrennt sind.

22. Verfahren nach Patentanspruch 21,
bei welchem das Diaphragma sowohl für die Flüssigkeiten als auch für die in den Flüssigkeiten befindlichen Ionen durchlässig ist.

23. Verfahren nach Patentanspruch 21,
bei welchem das Diaphragma nicht für die Flüssigkeiten sondern nur für in den Flüssigkeiten vorhandene Ionen durchlässig ist.

24. Verfahren nach einem der Patentansprüche 1 bis 23,
bei welchem der Anolyt im Anodenraum einen anderen Druck aufweist als der Katholyt im Kathodenraum.

25. Elektrolysezelle mit einem Anoden- und einem Kathodenraum zum gezielten Einstellen von Redoxpotentialen und/ oder pH⁺-Werten von mindestens einer Flüssigkeit,
wobei die Elektrolysezelle (1) eine Wirbelschichtelektrolysezelle (1) ist und im Anodenraum (2) eine Anode (3), im Kathodenraum (4) eine Kathode (5) und zwischen dem Anoden- (2) und dem Kathodenraum (4) ein Diaphragma (6) aufweist, welches den Anoden- (2) von dem Kathodenraum (4) trennt sowie Zu- (9; 7) und Abführungen (10; 8) für den Katholyten (9; 10) und den Anolyten (7; 8) hat und
wobei die Anode (3) und die Kathode (5) unterschiedliche Dimensionen haben und entweder beide eine im wesentlichen zylindermantelförmige Form aufweisen oder eine von beiden eine zylindrische und die jeweils andere eine zylindermantelförmige Form hat und das Diaphragma zylindermantelförmig ausgebildet ist und sich zwischen der Anode (3) und dem Diaphragma (6) ein im wesentlichen zylindermantelförmiger Anodenraum (2) und zwischen dem Diaphragma (6) und der Kathode (5)ein im wesentlichen zylindermantelförmiger Kathodenraum (4) befindet und wobei der Anodenraum (2)von einem Anolyten, der elektrisch aufladbare Partikel enthält und der Kathodenraum (4) von einem Katholyten, der elektrisch aufladbare Partikel enthält, durchströmbar ist.

26. Elektrolysezelle nach Patentanspruch 25,
bei welcher die Anode (3) einen kreisförmigen und die Kathode (5) einen ringförmigen Querschnitt aufweist.

27. Elektrolysezelle nach einem der Patentansprüche 25 oder 26,
bei welcher die Anode (3), die Kathode (5) und das Diaphragma (6) konzentrisch zueinander angeordnet sind.

28. Elektrolysezelle nach einem der Patentansprüche 25 bis 27,
bei welcher die Anode (3), die Kathode (5) und das Diaphragma (6) im wesentlichen gleiche Höhen aufweisen.

29. Elektrolysezelle nach einem der Patentansprüche 25 bis 28,
bei welcher die Kathode (5) und die Anode (3) im Abstand von Diaphragma (6) angeordnet sind und die Kathode (5) oder die Anode (3) oder beide (5; 3) eine im wesentlichen zylinderförmige Oberfläche haben und aus im wesentlichen horizontal übereinander und gegeneinander flüssigkeitsdicht angeordneten Segmenten (5'; 5''; 5'''; 3'; 3''; 3''') bestehen, die gegeneinander elektrisch isoliert sind und von denen jedes dieser Segmente (5'; 5''; 5'''; 3'; 3''; 3''') einen eigenen elektrischen Versorgungsanschluß (16; 16'; 16''; 15; 15'; 15'') hat und mittels dieser mit einer unterschiedlichen elektrischen Spannung beaufschlagt werden kann.

30. Elektrolysezelle nach einem der Patentansprüche 25 bis 29,
bei welcher die Flüssigkeitszuläufe (7; 9) zum Anoden- (2) und zum Kathodenraum (4) und die Flüssigkeitsabläufe (8; 10) vom Anoden- (2) und vom Kathodenraum (4) so gestaltet und angeordnet sind, daß der Anolyt mit den in ihm enthaltenen Wirbelkörpern (11) den Anoden- (2) und der Katholyt mit den in ihm enthaltenen Wirbelkörpern (12) den Kathodenraum (4) von unten nach oben und mit einer spiralförmigen Bewegung durchströmt.

31. Elektrolyseanlage zum gezielten Einstellen von Redoxpontentialen und/oder pH⁺-Werten von mindestens einer Flüssigkeit mit folgenden Komponenten:
- mindestens einer Elektrolysezelle (1) gemäß einem der Patentansprüche 25 bis 29 mit einem eine Anode (3) enthaltenden Anodenraum (2) und einem eine Kathode (5) enthaltenden Kathodenraum (4), wobei Anodenraum (2) und Kathodenraum (4) durch ein Diaphragma (6) getrennt sind,
- Vorrichtungen wie Behälter, Rohrleitungen, Pumpen (24; 25; 36; 37) und Regeleinrichtungen zum geregelten Zuführen von Wirbelkörpern (11; 12) zur Anolyt- ( 26; 27; 25) und zur Katholytflüssigkeit (39; 38; 37), zum geregelten Zu-und Einführen der Anolyt- und der Katholytflüssigkeit einschließlich der in ihnen befindlichen Wirbelkörper (11; 12) zum und in den Anoden- (7; 2) und zum und in den Kathodenraum (9; 4) der Elektrolysezelle (1), zum geregelten Durchströmen der wirbelkörperhaltigen Flüssigkeiten durch den Anoden- (2) und den Kathodenraum (4) und zum Abführen des Anolyten und des Katholyten aus der Elektrolysezelle (1) (8; 10), zum Abtrennen der Wirbelkörper (11; 12) vom Anolyten und vom Katholyten (26; 39) und zum Weiterleiten der Flüssigkeiten in nachgeschaltete Reaktoren oder Behälter (29; 42),
- Zu- und Abführeinrichtungen für den elektrischen Strom an der Anode (20; 15; 15'; 15'') und an der Kathode (21; 16; 16'; 16''),
Meßeinrichtungen zum Messen des elektrischen Zellenstromes, Meß- und Regeleinrichtungen zum Messen und Regeln der elektrischen Spannung sowohl an der Anode (3) als auch an der Kathode (5), Meß- und Regeleinrichtungen zum Messen und Einstellen des Redoxpotentials und des pH⁺-Wertes der Anoden- und der Kathodenflüssigkeit durch 1. geregeltes Einstellen der Strömungsgeschwindigkeiten dieser Flüssigkeiten im Anoden- (2) und im Kathodenraum (5) und 2. durch geregeltes Einstellen der elektrischen Spannungen am Anoden- (2) und am Kathodenraum (4),
- Meß-, Regel- und Fördereinrichtungen für die den Anoden- (2) und den Kathodenraum (4) durchströmenden Flüssigkeiten, einschließlich der von diesen Flüssigkeiten mitgeführten Wirbelkörper.

32. Verwendung des Verfahrens nach den Patentansprüchen 1 bis 24, der Elektrolysezelle nach den Patentansprüchen 25 bis 30 und der Elektrolyseanlage gemäß Patentanspruch 31 für das Einstellen der Redoxpotentiale und pH⁺-Werte von Waschwässern in Gasreinigungsanlagen, insbesondere von Waschwässern für das Reinigen von Abgasen von Müllverbrennungsanlagen.

## Claims

1. Process for the controlled adjustment of the redox potential and/or the pH⁺ value of at least one liquid in at least one electrolysis cell for the purification of such a liquid or for preparing such a liquid as a reactive liquid for further process steps,
which comprises passing a current of the at least one liquid through at least one fluidized-bed electrolysis cell that has a cathode space and an anode space and in which there are fluidized bodies capable of being charged with electric charges, wherein the redox potential and/or the pH⁺ of the at least one liquid can be set to a particular desired value during its flow through the fluidized-bed electrolysis cell, both in the cathode space and in the anode space by separate regulation of the volumetric flowrate of the catholyte in the cathode space and by separate regulation of the volumetric flowrate of the anolyte in the anode space in conjunction with the adjustment of the electric cell current in the electrolysis cell.

2. Process according to claim 1, in which only one liquid is treated and at least one component flow of this liquid is first passed through the cathode space and then at least one component flow of this liquid is passed through the anode space of the electrolysis cell after leaving the cathode space.

3. Process according to claim 1, in which only one liquid is treated, wherein two component flows of this liquid are formed and one of these component flows flows through the anode space and the other one flows through the cathode space.

4. Process according to claim 1, in which anolyte and catholyte are different liquids.

5. Process according to claim 4, in which the anolyte and the catholyte have different pH⁺s and/or different redox potentials prior to flowing into the electrolysis cell.

6. Process according to any one of claims 1 to 5, in which the redox potential of the liquid is increased and the pH⁺ is reduced in the anode space of the electrolysis cell and the redox potential of the liquid is reduced and the pH⁺ is increased in the cathode space of the electrolysis cell.

7. Process according to any one of claims 1 to 6, in which the liquids are contaminated with halogens and/or halogenides and/or halogen compounds and/or heavy-metal ions and/or dioxins and/or suspended matter.

8. Process according to claim 7, in which chlorine is liberated anodically.

9. Process according to claim 7, in which bromine and iodine, but no chlorine, are liberated anodically.

10. Process according to claim 7, in which iodine, but no bromine or/and chlorine, is/are liberated anodically.

11. Process according to any one of claims 7 to 10, in which organic compounds are decomposed anodically and/or cathodically to form low-molecular-weight and/or elemental substances.

12. Process according to claim 11, in which toxic dioxins and toxic furans are decomposed anodically or/and cathodically to form harmless compounds.

13. Process according to any one of claims 7 to 12, in which heavy metals and hydrogen are separated cathodically.

14. Process according to any one of claims 1 to 13, in which the liquids are wastewater from plating plants, percolation water from refuse dumps or scrubbing water from gas-scrubbing plants, in particular from flue-gas scrubbers of refuse combustion plants.

15. Process according to claim 14, in which the liquids are scrubbing water from gas-scrubbing plants and anolyte and catholyte originate from the same scrubber.

16. Process according to claim 15, in which the scrubbing water concerned is first passed through the cathode space and then through the anode space of the electrolysis cell or vice versa.

17. Process according to claim 14, in which the liquids are scrubbing water from gas-scrubbing plants and anolyte and catholyte originate from different scrubbers.

18. Process according to claim 17, in which the liquid from the one scrubber is acidic and the liquid from the other scrubber is neutral to alkaline.

19. Process according to any one of claims 15 to 18, in which, after the electrolytic treatment, the scrubbing water is are fed back as reactive liquids into at least one of the scrubbers.

20. Process according to any one of claims 6 and 17 to 19, in which the liquids that form the anolyte originate from a scrubber that is operated with acidic scrubbing liquid and, after their electrolytic treatment, are fed back into the same and the liquids that form the catholyte originate from a scrubber that is operated with neutral to alkaline scrubbing liquid and that are fed back after their electrolytic treatment into the same.

21. Process according to any one of claims 1 to 20, in which the anolyte and the catholyte are separated by a diaphragm in the electrolysis cell.

22. Process according to claim 21, in which the diaphragm is permeable both to the liquids and to the ions contained in the liquids.

23. Process according to claim 21, in which the diaphragm is not permeable to the liquids, but only to ions present in the liquids.

24. Process according to any one of claims 1 to 23, in which the anolyte in the anode space is at a pressure different from that of the catholyte in the cathode space.

25. Electrolysis cell, having an anode space and a cathode space for the controlled adjustment of redox potentials and/or pH⁺s of at least one liquid, wherein the electrolysis cell (1) is a fluidized-bed electrolysis cell (1) and has an anode (3) in the anode space (2), a cathode (5) in the cathode space (4) and a diaphragm (6) between the anode space (2) and the cathode space (4), which diaphragm separates the anode space (2) from the cathode space (4) and also has inlets (9; 7) and drains (10; 8) for the catholyte (9; 10) and the anolyte (7; 8), and
wherein the anode (3) and the cathode (5) have different dimensions and either both have a substantially cylindrical sleeve shape or one of the two has a cylindrical shape and the respective other one has a cylindrical-sleeve shape and the diaphragm is of cylindrical-sleeve design, and a substantially cylindrical-sleeve-shaped anode space (2) is situated between the anode (3) and the diaphragm (6) and a substantially cylindrical-sleeve-shaped cathode space (4) is situated between the diaphragm (6) and the cathode (5), and wherein the anode space (2) can have an anolyte containing electrically chargeable particles flowing through it and the cathode space (4) can have a catholyte containing electrically chargeable particles flowing through it.

26. Electrolysis cell according to claim 25, in which the anode (3) has a circular cross-section and the cathode (5) has an annular cross-section.

27. Electrolysis cell according to either of claims 25 or 26 in which the anode (3), the cathode (5) and the diaphragm (6) are disposed concentrically with respect to one another.

28. Electrolysis cell according to any one of claims 25 to 27, in which the anode (3), the cathode (5) and the diaphragm (6) have substantially the same height.

29. Electrolysis cell according to any one of claims 25 to 28, in which the cathode (5) and the anode (3) are disposed at a distance from the diaphragm (6) and the cathode (5) or the anode (3) 'or both (5; 3) have a substantially cylindrical surface and comprise segments (5'; 5"; 5"'; 3'; 3"; 3"') that are disposed substantially horizontally above one another and in a liquid-tight manner with respect to one another, that are electrically insulated with respect to one another and each of these segments (5'; 5"; 5"'; 3'; 3"; 3"') of which has a separate electrical supply terminal (16; 16'; 16"; 15; 15'; 15") and can be subjected to a varying voltage by means of them.

30. Electrolysis cell according to any one of claims 25 to 29, in which the liquid inlets (7; 9) to the anode space (2) and to the cathode space (4) and the liquid drains (8; 10) of the anode space (2) and of the cathode space (4) are configured and disposed in such a way that the anolyte with the fluidized bodies (11) it contains flows through the anode space (2) from bottom to top and with a spiral movement and the catholyte with the fluidized bodies (12) it contains flows through the cathode space (4) from bottom to top and with a spiral movement.

31. Electrolysis system for the controlled adjustment of redox potentials and/or pH⁺s of at least one liquid having the following components:
- at least one electrolysis cell (1) in accordance with any one of claims 25 to 29 having an anode space (2) containing an anode (3) and a cathode space (4) containing a cathode (5), wherein anode space (2) and cathode space (4) are separated by a diaphragm (6),
- fixtures such as containers, pipelines, pumps (24; 25; 36; 37) and regulating devices for the regulated supply of fluidized bodies (11; 12) to the anolyte liquid (26; 27; 25) and to the catholyte liquid (39; 38; 37), for the controlled supply and introduction of the anolyte liquid and the catholyte liquid including the fluidized bodies (11; 12) they contain to and into the anode space (7; 2) and to and into the cathode space (9; 4) of the electrolysis cell (1), for the regulated flow of the liquid containing fluidized bodies through the anode space (2) and the cathode space (4) and for the drainage of the anolyte and of the catholyte from the electrolysis cell (1) (8; 10) for the separation of the fluidized bodies (11; 12) from the anolyte and from the catholyte (26; 39) and for conveying the liquids into downstream reactors or containers (29; 42),
- supply and drain devices for the electric current at the anode (20; 15; 15'; 15") and at the cathode (21; 16; 16'; 16"),
- measuring devices for measuring the electric cell current, measuring and regulating devices for measuring and regulating the voltage both at the anode (3) and at the cathode (5), measuring and regulating devices for measuring and adjusting the redox potential and the pH⁺ of the anode liquid and of the cathode liquid by: 1. regulated adjustment of the flowrates of these liquids in the anode space (2) and in the cathode space (5), and 2. by regulated adjustment of the voltage at the anode space (2) and at the cathode space (4),
- measuring, regulating and delivery devices for the liquids, including the fluidized bodies entrained by these liquids, flowing through the anode space (2) and the cathode space (4).

32. Use of the process according to claims 1 to 24, of the electrolysis cell according to claims 25 to 30 and of the electrolysis system in accordance with claim 31 for the adjustment of the redox potentials and pH⁺s of scrubbing waters in gas-purification systems, in particular of scrubbing waters for the purification of waste gases of refuse combustion systems.

## Revendications

1. Procédé pour régler de manière dirigée le potentiel Redox et/ou le pH d'au moins un liquide dans au moins une cellule d'électrolyse pour nettoyer un tel liquide ou pour fournir un tel liquide comme liquide réactif pour d'autres étapes de procédé, selon lequel
on fait passer un flux d'au moins un liquide à travers une cellule d'électrolyse à couche à courant tourbillonnaire, ayant un volume cathodique et un anodique, cellule dans laquelle se trouvent des organes tourbillonnaires susceptibles d'être chargés de charges électriques,
le potentiel Redox et/ou le pH d'au moins un liquide, lors de son passage à travers la cellule d'électrolyse à couche à courant tourbillonnaire, à la fois dans le volume cathodique et le volume anodique, étant mis à des valeurs souhaitées par régulation séparée du débit volumique du catholyte dans le volume cathodique et par régulation séparée du débit volumique de l'anolyte dans le volume anodique en combinaison avec le réglage du courant électrique dans la cellule d'électrolyse.

2. Procédé selon la revendication 1,
selon lequel
il ne s'agit que d'un liquide et au moins un flux partiel de ce liquide est conduit d'abord à travers le volume cathodique puis au moins un volume partiel de ce liquide à la sortie du volume cathodique est conduit à travers le volume anodique de la cellule d'électrolyse.

3. Procédé selon la revendication 1,
selon lequel
on ne traite qu'un liquide et on forme deux flux partiels de ce liquide et l'un de ces flux partiels traverse le volume anodique et l'autre des flux partiels traverse le volume cathodique.

4. Procédé selon la revendication 1,
selon lequel
l'anolyte et le catholyte sont des liquides différents.

5. Procédé selon la revendication 4.
selon lequel
l'anolyte et le catholyte ont des pH et/ou des potentiels Redox différents avant d'arriver dans la cellule d'électrolyse.

6. Procédé selon l'une des revendications 1 à 5,
selon lequel
dans le volume anodique de la cellule d'électrolyse on augmente le potentiel Redox du liquide et on diminue le pH et dans le volume cathodique de la cellule d'électrolyse on diminue le potentiel Redox du liquide et on augmente son pH.

7. Procédé selon l'une des revendications 1 à 6,
selon lequel
les liquides sont chargés d'halogène et/ou d'halogénures et/ou de combinaison d'halogènes et/ou d'ions de métaux lourds et/ou de dioxines et/ou de matières en suspension.

8. Procédé selon la revendication 7.
selon lequel
on libère le chlore anodique.

9. Procédé selon la revendication 7,
selon lequel
on libère le brome et l'iode anodique mais pas de chlore.

10. Procédé selon la revendication 7,
selon lequel
on libère l'iode anodique mais pas de brome ou/et pas de chlore.

11. Procédé selon l'une des revendications 7 à 10,
selon lequel
on décompose des composés organiques de manière anodique et/ou cathodique pour obtenir des produits à poids moléculaire plus faible et/ou des produits élémentaires.

12. Procédé selon la revendication 11,
selon lequel
on décompose la dioxine ou des furanes toxiques par voie anodique et/ou cathodique pour obtenir des composants non nocifs.

13. Procédé selon l'une des revendications 7 à 12,
selon lequel
on dépose des métaux lourds et l'hydrogène par voie cathodique.

14. Procédé selon l'une des revendications 1 à 13,
selon lequel
les liquides sont des eaux usées provenant d'installations de galvanisation, des eaux d'infiltration de dépôts d'ordures, des eaux de rinçage d'installations de rinçage de gaz, en particulier des eaux de rinçage de fumées provenant d'installations d'incinération d'ordures.

15. Procédé selon la revendication 14,
selon lequel
les liquides sont des eaux de rinçage venant d'installations de lavage de gaz et l'anolyte et le catholyte proviennent du même laveur.

16. Procédé selon la revendication 15,
selon lequel
l'eau de lavage concernée est conduite d'abord à travers le volume cathodique puis à travers le volume anodique de la cellule d'électrolyse et inversement.

17. Procédé selon la revendication 14,
selon lequel
les liquides sont des eaux de lavage d'installations de lavage de gaz et l'anolyte et le catholyte proviennent de différents laveurs.

18. Procédé selon la revendication 17,
selon lequel
le liquide d'un laveur réagit de manière acide et le liquide de l'autre laveur est neutre-alcalin.

19. Procédé selon l'une des revendications 15 à 18.
selon lequel
après traitement électrolytique, les eaux de rinçage sont reconduites comme liquide de réaction dans au moins l'un des laveurs.

20. Procédé selon l'une des revendications 6 et 17 à 19,
selon lequel
le liquide qui forme les anolytes provient d'un laveur fonctionnant avec un liquide de lavage acide et après son traitement électrolytique le liquide est reconduit dans ce laveur et le liquide qui forme les catholytes provient d'un laveur fonctionnant avec un liquide de lavage neutre-alcalin et après son traitement électrolytique, ce liquide est reconduit dans ce laveur.

21. Procédé selon l'une des revendications 1 à 20,
selon lequel
l'anolyte et le catholyte sont séparés par un diaphragme dans la cellule d'électrolyse.

22. Procédé selon la revendication 21,
selon lequel
le diaphragme est perméable à la fois aux liquides et aux ions contenus dans les liquides.

23. Procédé selon la revendication 21,
selon lequel
le diaphragme n'est pas perméable pour les liquides mais uniquement pour ions contenus dans les liquides.

24. Procédé selon l'une des revendications 1 à 23,
selon lequel
l'anolyte du volume anodique est à une autre pression que le catholyte dans le volume cathodique.

25. Cellule d'électrolyse comprenant un volume anodique et un volume cathodique pour régler de manière dirigée le potentiel Redox et/ou le pH d'au moins un liquide,
selon lequel
la cellule d'électrolyse (1) est une cellule d'électrolyse à couche à courant tourbillonnaire (1) et le volume anodique (2) comporte une anode (3), le volume cathodique (4). une cathode (5) et entre le volume anodique (2) et le volume cathodique (4) il y a un diaphragme (6) séparant le volume anodique (2) du volume cathodique (4) ainsi que des alimentations (9, 7) et des évacuations (10; 8) pour les catholytes (9, 10) et les anolytes (7, 8) et
l'anode (3) et la cathode (5) ont des dimensions différentes et soit les deux ont une forme essentiellement d'enveloppe cylindrique ou l'une des deux a une forme cylindrique et l'autre une forme d'enveloppe cylindrique et le diaphragme a la forme d'une enveloppe cylindrique et
entre l'anode (3) et le diaphragme (6) on a un volume anodique (2) essentiellement en forme d'enveloppe cylindrique et entre le diaphragme (6) et la cathode (5) on a un volume cathodique (4) essentiellement en forme d'enveloppe cylindrique et
le volume anodique (2) est traversé par un anolyte contenant des particules chargées électriquement et le volume cathodique (4) est traversé par un catholyte contenant des particules chargées électriquement.

26. Cellule d'électrolyse selon la revendication 25,
selon laquelle
l'anode (3) a une section de forme circulaire et la cathode (5) une section de forme annulaire.

27. Cellule d'électrolyse selon l'une des revendications 25 ou 26,
selon laquelle
l'anode (3), la cathode (5) et le diaphragme (6) sont installés concentriquement.

28. Cellule d'électrolyse selon l'une des revendications 25 à 27,
selon laquelle
l'anode (3), la cathode (5) et le diaphragme (6) ont essentiellement la même hauteur.

29. Cellule d'électrolyse selon l'une des revendications 25 à 28,
selon laquelle
la cathode (5) et l'anode (3) sont distantes du diaphragme (6) et la cathode (5) ou l'anode (3) ou les deux (5, 3) ont une surface essentiellement cylindrique et se composent de segments (5', 5", 5"', 3', 3", 3'") installés essentiellement horizontalement l'un au-dessus de l'autre et de manière étanche au liquide l'un par rapport à l'autre, en étant isolés électriquement l'un par rapport à l'autre et parmi ces segments (5', 5", 5"', 3', 3", 3'"), l'un présente un branchement d'alimentation électrique propre (16, 16', 16", 15, 15', 15") pour recevoir une tension électrique différente.

30. Cellule d'électrolyse selon l'une des revendications 25 à 29,
selon laquelle
les arrivées de liquide (7, 9) du volume anodique (2) et du volume cathodique (4) ainsi que les sorties de liquide (8, 10) du volume anodique (2) et du volume cathodique (4) sont conçues et installées pour que l'anolyte avec les organes tourbillonnaires (11) qu'il contient traverse le volume anodique (2) de bas en haut et selon un mouvement en spirale et que le catholyte avec les organes tourbillonnaires (12) qu'il contient traverse le volume cathodique (4) de bas en haut et selon un mouvement en spirale.

31. Installation d'électrolyse pour régler de manière dirigée le potentiel Redox et/ou le pH d'au moins un liquide et ayant les composants suivants :
- au moins une cellule d'électrolyse selon l'une des revendications 25 à 29 avec un volume anodique (2) contenant une anode (3) et un volume cathodique (4) contenant une cathode (5), le volume anodique (2) et le volume cathodique (4) étant séparés par un diaphragme (6),
- des dispositifs tels que des récipients, des conduites tubulaires, des pompes (24 ; 25 ; 36 ; 37) et des installations de régulation pour fournir de manière régulée des organes tourbillonnaires (11 : 12) dans le liquide anolytique (26; 27; 25) et le liquide katholytique (39 ; 38 ; 37), pour la fourniture et l'introduction régulées de liquide anolytique et de liquide catholytique y compris les organes tourbillonnaires (11, 12) qu'ils contiennent vers et dans le volume anodique (7: 2) vers et dans le volume cathodique (9 : 4) de la cellule d'électrolyse (1),
pour faire passer de manière régulée les liquides contenant des organes tourbillonnaires à travers le volume anodique (2) et le volume cathodique (4) et pour évacuer l'anolyte et le catholyte de la cellule d'électrolyse (1) (8 ; 10) pour séparer les organes tourbillonnaires (11 ; 12) de l'anolyte et du catholyte (26 ; 39) et pour transférer les liquides vers des réacteurs en aval ou des récipients (29 ; 42),
- des installations d'entrée et de sortie de courant électrique de l'anode (20 ; 15 ; 15' ; 15") et de la cathode (21 ; 16 ; 16' ; 16"),
des installations de mesure pour mesurer le courant électrique dans la cellule, les installations de mesure et de régulation pour mesurer et réguler la tension électrique à la fois sur l'anode (3) et sur la cathode (5), des installations de mesure et de régulation pour mesurer et régler le potentiel Redox et le pH du liquide anodique et du liquide cathodique par
1. le réglage régulé des vitesses d'écoulement de ces liquides dans le volume anodique (2) et le volume cathodique (5) et
2. le réglage régulé des tensions électriques dans le volume anodique (2) et dans le volume cathodique (4),
3. des installations de mesure des installations de régulation et des installations de transfert pour les liquides traversant le volume anodique (2) et le volume cathodique (4) y compris les organes tourbillonnaires entraînés par ces liquides.

32. Application du procédé selon l'une des revendications 1 à 24, de la cellule d'électrolyse selon les revendications 25 à 30 et de l'installation d'électrolyse selon la revendication 31 pour régler le potentiel Redox et le pH d'eau de lavage dans des installations de nettoyage de gaz, en particulier les eaux de lavage ou de rinçage pour le nettoyage des gaz d'évacuation d'installations d'incinération d'ordures.
